# FASCICULE DE BREVET EUROPEEN

(11) **EP 0 521 818 B1**
(45) Date de publication et mention de la délivrance du brevet: **17.04.1996**
(21) Numéro de dépôt: 92810378.7
(22) Date de dépôt: 20.05.1992
(51) Int. Cl.: H05B 39/04, G05D 25/02

(54) **Installation de commande du niveau d'éclairement d'un local**
Innenraum-Beleuchtungssteurungssystem
Room illumination control system

(30) Priorité: 03.07.1991 FR 9108331
(43) Date de publication de la demande: 07.01.1993
(73) Titulaire: SOMFY, F-74300 Cluses (FR)
(72) Inventeur: Grehant, Bernard Jean-Pierre, F-73000 Barberaz (FR)
(74) Mandataire: Meylan, Robert Maurice

(56) Documents cités:
- EP-A- 0 410 484
- WO-A-89/05562
- FR-A- 2 040 277
- Proceedings of the 33rd Midwest Symposium on Circuits and Systems, August 12 - 15, 1990, Calgary Convention Centre, Calgary, Alberta, Canada, pages 677 - 680, N.S.H. BROOKS : "Multi-variable Optimisation Within an Art Gallery Lighting Controller". EP-A-0 517 650 dont la priorité est FR 91 06 160, dont le numéro de publication est FR-A-2 676 842.

## Description

La présente invention concerne une installation de commande du niveau d'éclairement d'un local pourvu d'au moins une ouverture permettant l'entrée de la lumière naturelle et équipée de moyens d'occultation de ladite ouverture et de moyens d'éclairage artificiel, moyens associés à des opérateurs de commande, cette installation comprenant des moyens photosensibles pour la mesure du niveau d'éclairement, des moyens de commande automatique des opérateurs contrôlés par les moyens photosensibles en fonction d'une consigne d'éclairement, des moyens de réglage de cette consigne constitués par des contacts actionnables manuellement et des moyens de stockage de cette consigne, les moyens photosensibles et les moyens de réglage de la consigne étant associés dans un équipement mobile destiné à être disposé dans la zone éclairée par l'ensemble des moyens d'occultation et d'éclairage artificiel, les moyens de commande automatique comprenant une unité logique de traitement reliée électriquement, par liaison galvanique ou non, aux moyens photosensibles, aux contacts actionnables manuellement et aux opérateurs, l'unité logique de traitement étant programmée pour lire l'état des contacts et les valeurs mesurées par les moyens photosensibles et émettre des signaux de plus ou moins d'éclairement en direction des opérateurs, d'une part en fonction de l'état desdits contacts et, d'autre part en fonction de l'écart entre la valeur de consigne et la valeur mesurée par les moyens photosensibles, et pour enregistrer, à un instant déterminé par l'utilisateur, une valeur d'éclairement mesurée par les moyens photosensibles.

Une telle installation fait l'objet de la demande de brevet FR N° 91 06 160 de la demanderesse. Cette installation permet de commander plusieurs moyens différents placés en parallèle à l'aide d'une seule commande transmise simultanément à tous les moyens. L'action visée est essentiellement satisfaite par le moyen le plus rapide. Le moyen le plus lent, bien que sollicité à chaque manoeuvre, n'apporte qu'une contribution insignifiante. Or, aussi bien pour des impératifs de confort, que d'économie d'énergie, il serait judicieux d'avoir une action hiérarchisée sur les différents moyens destinés à la commande et/ou au contrôle du niveau d'éclairement. A titre d'exemple, on peut supposer que pour un local équipé d'un volet roulant, d'un store vénitien d'intérieur et d'un éclairage à gradateur, une analyse locale énergie/confort peut donner les conclusions suivantes: l'éclairage ne doit être utilisé qu'en dernier recours du fait de la consommation électrique; le volet roulant a sa position fixée a priori à partir de considérations thermiques et il ne devrait être déplacé que si le besoin lumineux ne peut être ajusté au moyen du store intérieur; l'actionnement du store ne modifie pas ou peu le bilan énergétique.

Dans le brevet US 4,622,470, décrivant la commande d'un pare-soleil à lames orientables, une certaine hiérarchisation est prévue. Elle ne concerne toutefois que les types de capteur, la hiérarchie étant la suivante: nuit, intérieur, soleil. Le document "Proceedings of the 33rd Midwest Symposium on Circuits and Systems, August 12-15, 1990, Calgary Convention Center, Calgary, Alberta, Canada, pages 677-680, N.H.S. Brooks: Multi-variable Optimisation within an Art Gallery Lighting Controller "décrit une installation dont les moyens photosensibles ne font pas partie d'un équipement mobile, mais sont fixes. En outre parmi ces moyens photosensibles fixes, certains ne mesurent que la lumière provenant de l'extérieur à travers les moyens d'occultation. Ces moyens sont disposés sous le toit dans un espace tampon. Les autres moyens photosensibles mesurent par contre la lumière réfléchie par les objets éclairés. Par ailleurs la consigne d'éclairement ne peut être modifiée à tout instant par l'utilisateur. En outre cette consigne est fixe. La présente invention a pour but d'assurer une commande hiérarchisée des différents moyens d'occultation et d'éclairage dans une installation telle que définie plus haut, tenant compte des temps de réaction des différents moyens et permettant d'assurer une économie d'énergie.

L'installation selon l'invention est caractérisée en ce qu'elle comprend des moyens pour assurer la commande successive et dans un ordre prédéfini des moyens d'occultation et des moyens d'éclairage, ces moyens de commande étant agencés de manière à ce qu'ils passent d'un moyen au moyen suivant au bout d'une durée déterminée.

L'ordre dans lequel sont commandés les différents moyens peut être fixé de façon définitive ou modifiable volontairement ou automatiquement en tenant compte, par exemple, d'un facteur thermique.

La durée déterminée peut être identique pour chaque moyen et correspondre à la durée nécessaire au moyen le plus lent pour passer d'un état complètement ouvert à un état complètement fermé ou inversement, ou propre à chaque moyen ou correspondant au temps nécessaire au moyen le plus lent pour provoquer une variation significative de l'éclairement, cette dernière durée pouvant être choisie propre à chaque moyen.

Dans certaines formes d'exécution de l'invention le temps de commande des différents moyens est ainsi optimisé.

Dans certaines formes d'exécution le moyen à commander est sélectionné automatiquement, y compris lors d'une demande manuelle de modification du niveau d'éclairement.

Le dessin annexé représente, à titre d'exemple, plusieurs formes d'exécution de l'installation selon l'invention.

La figure 1 représente schématiquement un local équipé de différents moyens d'occultation et d'éclairage.

La figure 2 est une figure analogue à la figure 1 mais avec une variante de commande.

La figure 3 représente le schéma-bloc d'un premier mode d'exécution de l'installation selon l'invention.

La figure 4 représente le schéma-bloc d'un deuxième mode d'exécution.

La figure 5 représente partiellement le schéma-bloc d'un troisième mode d'exécution.

La figure 6 représente partiellement le schéma-bloc d'un quatrième mode d'exécution.

La figure 7 représente le schéma-bloc d'un cinquième mode d'exécution.

La figure 8 représente partiellement le schéma-bloc d'un sixième mode d'exécution.

La figure 9 représente partiellement le schéma-bloc d'un septième mode d'exécution.

La figure 10 représente, en langage d'analyse, le module logiciel du premier mode d'exécution.

La figure 11 est le module logiciel sous forme d'ordinogramme du premier mode d'exécution.

La figure 12 représente les ordinogrammes de certains sous-programmes de l'ordinogramme représenté à la figure 11.

La figure 13 représente le module logiciel, en langage d'analyse, du deuxième mode d'exécution.

La figure 14 représente le module logiciel, en langage d'analyse, du troisième mode d'exécution.

La figure 15 représente le module et logiciel, en langage d'analyse, d'une variante du troisième mode d'exécution. La figure 16 représente le module logiciel, en langage d'analyse, d'une seconde variante du troisième mode d'exécution.

La figure 17 représente le module logiciel, en langage d'analyse, d'une troisième variante du troisième mode d'exécution.

La figure 18 représente le module logiciel, en langage d'analyse, du premier ou deuxième mode d'exécution.

La figure 19 représente le module logiciel, en langage d'analyse, du quatrième mode d'exécution.

La figure 20 représente le module logiciel, en langage d'analyse, du cinquième mode d'exécution.

La figure 21 représente le module logiciel, en langage d'analyse, du sixième mode d'exécution.

La figure 22 représente le module logiciel, en langage d'analyse, du septième mode d'exécution.

La figure 23 représente le module logiciel, en langage d'analyse, d'une variante du sixième et septième mode d'exécution.

La figure 24 représente le module logiciel d'une autre variante du sixième mode d'exécution.

La figure 25 représente le module logiciel, en langage d'analyse, d'une deuxième variante du sixième mode d'exécution.

La figure 26 représente, schématiquement, les moyens d'occultation selon un huitième mode d'exécution.

La figure 27 représente le module logiciel, en langage d'analyse, du huitième mode d'exécution dérivé des sixième et septième modes d'exécution.

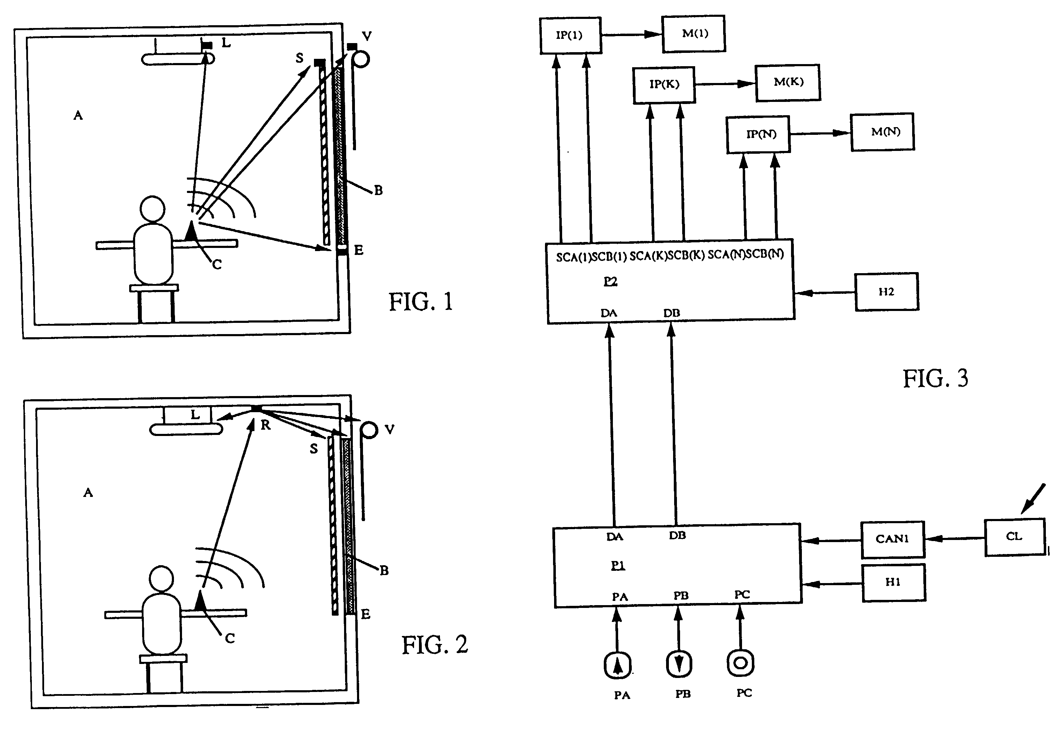

La figure 1 représente schématiquement un local A présentant une ouverture fermée par une baie vitrée B, en l'occurrence équipé d'un vitrage électro-chromique E. La baie B est munie à l'extérieur d'un volet roulant V et à l'intérieur d'un store vénitien S. Le local est éclairable au moyen d'une source lumineuse à gradateur L. L'utilisateur dispose d'un boîtier mobile C équipé d'éléments photosensibles pour la mesure du niveau d'éclairement. Le boîtier comprend en outre une unité logique de traitement et des touches de commande telles que décrit dans la demande de brevet N° 91 06 160. Dans l'exemple représenté à la figure 1, le boîtier C comprend en outre un émetteur commandant directement la source de lumière L, le store vénitien S, le volet roulant V et le vitrage électro-chromique E. L'installation est pourvue d'une télécommande telle que décrit dans la demande de brevet N° 91 06 160.

La figure 2 représente une variante de la figure 1 dans laquelle le boîtier C ne commande pas directement les moyens d'occultation et d'éclairage, mais les commande par l'intermédiaire d'un récepteur R qui réémet à son tour des signaux de commande vers les différents moyens.

Selon un premier mode d'exécution représenté à la figure 3, l'installation correspond au schéma de la figure 2. Elle comprend un premier processeur P1 disposé dans le boîtier C et présentant trois entrées logiques PA, PB, PC activées par des contacts manuels du même nom et signifiant respectivement demande manuelle de plus d'éclairement, demande manuelle de moins d'éclairement et demande manuelle d'enregistrement du niveau lumineux comme consigne. Comme décrit dans la demande précédente, le contact PC et l'entrée correspondante pourraient être supprimés au profit d'un enregistrement automatique de la consigne d'éclairement. Le processeur P1 présente en outre une entrée d'horloge H1. Les entrées PA, PB, PC, H1 peuvent activer, dans une version programmée, des interruptions de niveaux respectifs 1, 2, 3, 4, (0 = priorité maximum) ces interruptions ayant pour effet de faire sortir le processeur d'un mode sommeil basse consommation, si un tel mode est utilisé.

Le processeur P1 est en outre relié par un convertisseur analogique numérique CAN1 au capteur de luminosité CL monté dans le boîtier C. Deux sorties logiques DA et DB signifient respectivement demande résultante de plus d'éclairement et demande résultante de moins d'éclairement.

Le processeur P1 comprend un dispositif de mémorisation d'un programme logique PRG1 (ou un câblage logique) tel que le processeur P1 enregistre la valeur de consigne de niveau lumineux CNL comme étant la valeur d'éclairement mesuré par CL à l'instant où l'utilisateur actionne le contact PC, active les sorties DA et DB directement selon l'action manuelle sur PA ou PB ou à intervalles réguliers, cadencés par l'horloge interne H1, selon que la mesure d'éclairement faite par CL s'écarte dans l'un ou l'autre sens, à plus d'un seuil d'hystérésis HL près, de la consigne de niveau lumineux CNL enregistrée préalablement, définissant ainsi une zone de confort lumineux de largeur 2HL centré sur CNL, la valeur HL étant fixée par le constructeur.

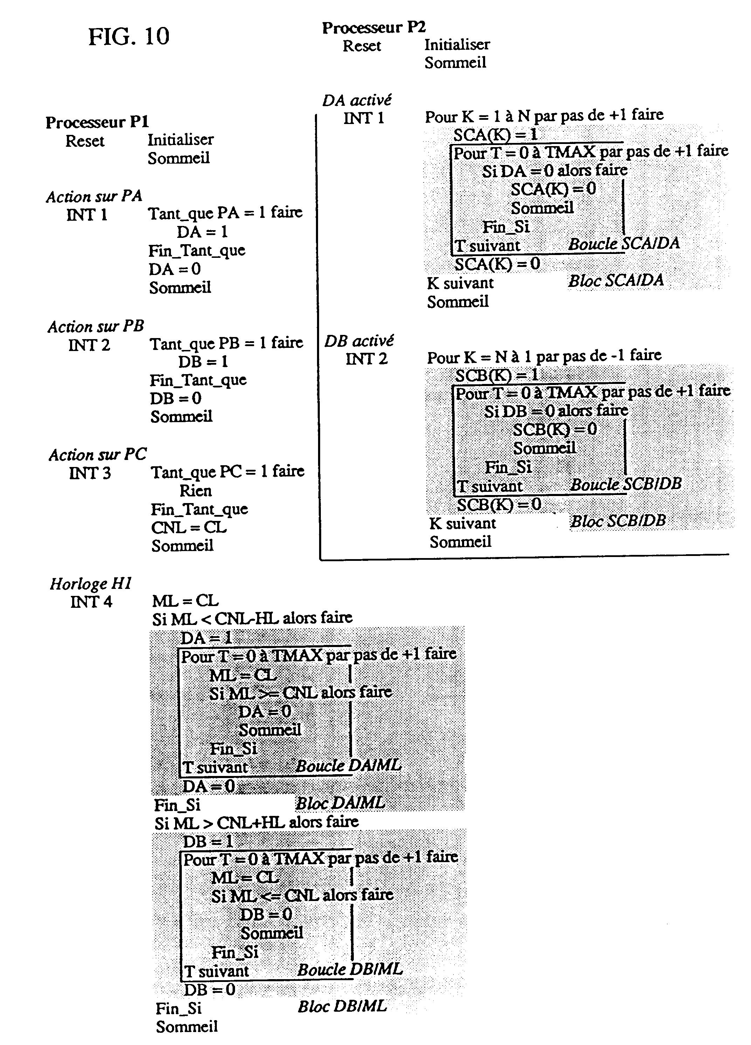

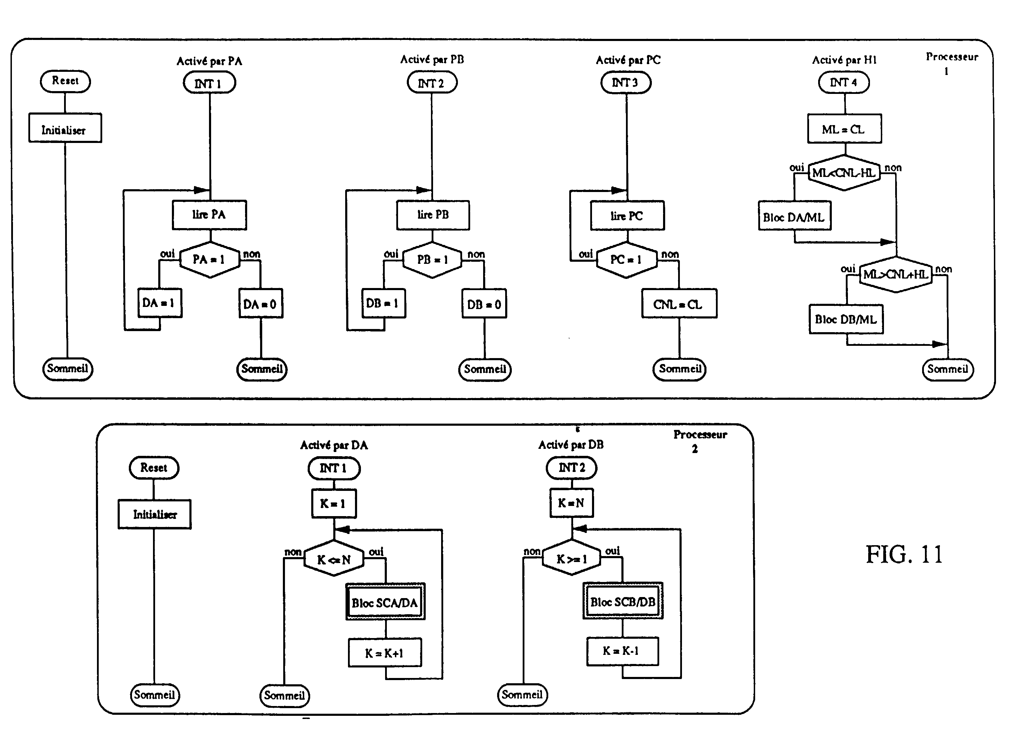

Dans une version programmée, cette action de correction automatique de niveau lumineux est obtenue par activation d'un programme représenté par le bloc DA/ML, que l'on trouve aux figures 10 et 11 sous INT4, si la mesure de l'éclairement ML, acquise par lecture de CL, est inférieure à CNL-HL, ou d'un programme désigné par bloc DB/ML (figures 10 et 11) si la mesure de l'éclairement ML est supérieure à CNL+HL, la durée TMAX utilisée correspondant au temps nécessaire pour faire passer successivement l'ensemble des moyens commandés d'une position totalement ouverte à totalement fermée ou inversément.

Il est utile de préciser ici que la structure des programmes bloc X/Y qui seront utilisés par la suite est identique à celle des blocs DA/ML et DB/ML. D'une manière générale, X désigne la variable activée pendant la durée d'exécution du programme: mise à 1 en début de programme et à 0 en fin de programme. Après mise à 1 de X, le programme exécute un sous-bloc dit "boucle X/Y" de durée TMAX pendant lequel il teste en permanence une condition sur la variable de sortie Y. Afin de simplifier l'écriture, l'acquisition de l'entrée Y avant chaque test n'a pas été explicitée. Si cette condition est réalisée, il y a sortie anticipée de bloc X/Y après avoir positionné à 0 la variable X.

L'installation comporte en outre un second processeur P2 disposant de deux entrées logiques DA et DB raccordés aux sorties de même nom du processeur P1. Le processeur P2 est également équipé d'une horloge H2. Dans une version programmée, les entrées DA et DB peuvent activer des interruptions de niveaux respectifs 1, 2, (0 = priorité maximum) ayant pour effet de faire sortir P2 d'un mode sommeil basse consommation si un tel modèle est utilisé. Le processeur P2 dispose en outre, pour chaque moyen M(K) commandé (K variant entre 1 et N) de deux sorties logiques SCA(K) et SCB(K), signifiant respectivement sortie de commande d'ouverture du moyen K et sortie de commande de fermeture du moyen M(K). Le processeur P2 dispose en outre d'un dispositif de mémorisation d'un programme logique PRG2 (ou d'un câblage logique) tel que le processeur P2 active les sorties commandant les moyens, de manière successive, et selon un ordre prédéfini par le constructeur, lorsque DA est activé et dans l'ordre inverse lorsque DB est activé, passe d'un moyen M(K) au moyen suivant M(K+1) ou M(K-1) au bout de la durée TMAX et cesse d'activer les sorties SCA(K) ou SCB(K) lorsque DA ou DB cessent d'être activées.

Dans une version programmée, ces actions sont obtenues par activation des programmes bloc SCA/DA pour K variant éventuellement de 1 à N lors d'une demande de plus d'éclairement DA ou des programmes bloc SCB/DB pour K variant éventuellement de N à 1 lors d'une demande de moins d'éclairement DB. Les moyens M(K) sont commandés par l'intermédiaire d'interfaces de puissance IP(K).

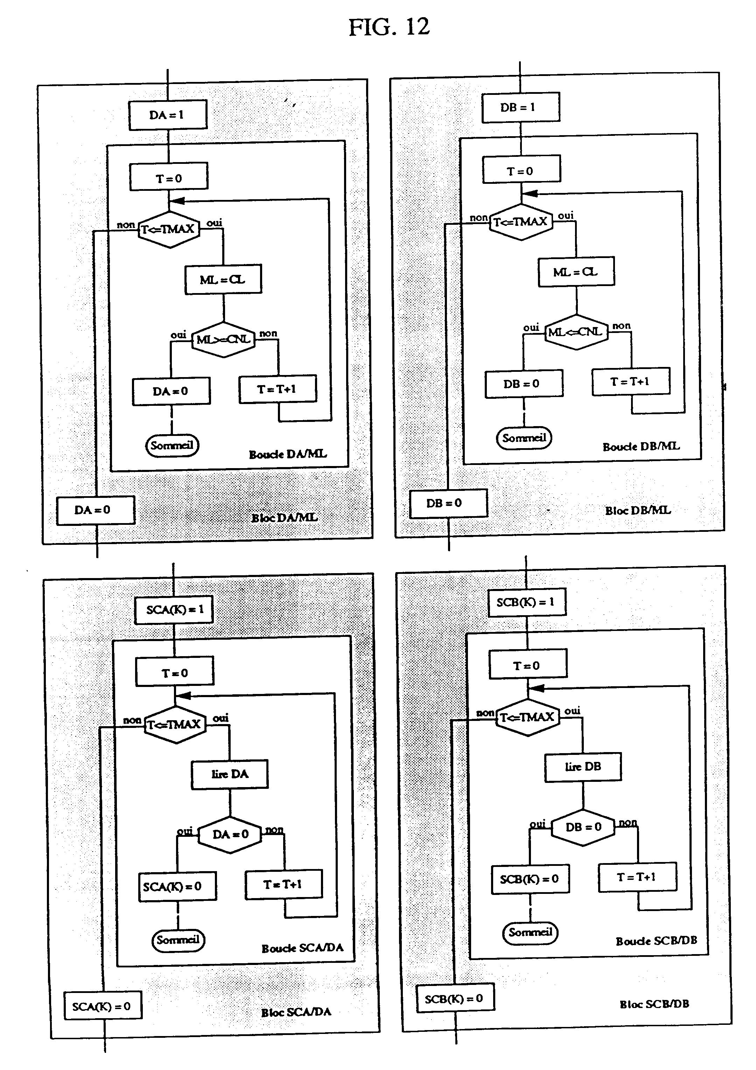

Le logiciel de cette première forme d'exécution est représenté respectivement en langage d'analyse à la figure 10 et sous forme d'ordinogramme aux figures 11 et 12. Cette double représentation est parfaitement claire pour l'homme du métier et une description serait surabondante.

Selon une première variante d'exécution la durée TMAX prévue dans PRG2 est remplacée par une durée TMAX(K) propre à chaque moyen, ce qui permet de réduire le temps de mise en action de l'ensemble. Dans le programme, il suffit de remplacer la constante TMAX apparaissant dans la boucle X/Y par la variable TMAX(K) et de mémoriser un tableau de N constantes affectées à chacune des valeurs de TMAX(K).

Selon une autre variante d'exécution, la liaison filaire entre P1 et P2 représentée à la figure 3 est remplacée par une liaison sans fil permettant de disposer PA, PB, PC, P1, CL dans le boîtier mobile C (figure 2) le processeur P2 étant disposé dans le récepteur R.

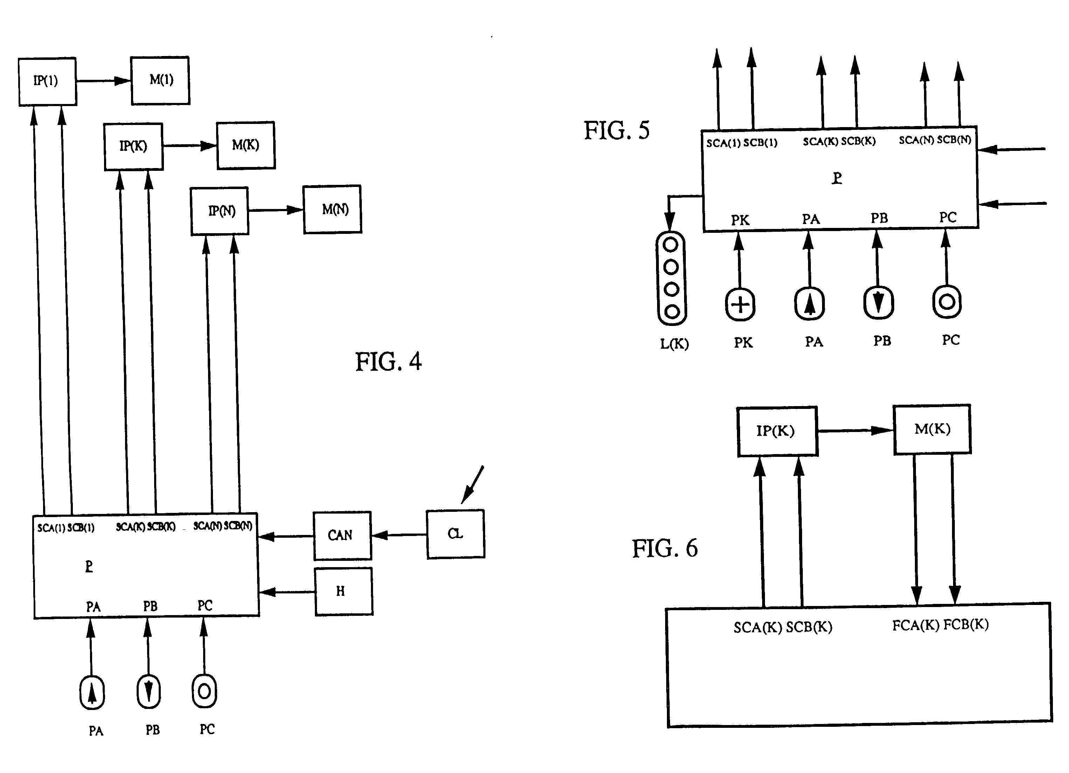

La figure 4 illustre un deuxième mode d'exécution dans lequel les processeurs P1 et P2 sont remplacés par un processeur unique P. Les lignes DA et DB sont remplacées par le couplage interne des programmes ou des câblages logiques de P1 et P2. Le processeur P présente les mêmes entrées que le processeur P1 et l'ensemble des sorties qui était affectées au processeur P2. Le processeur P enregistre la valeur de consigne de niveau lumineux CNL comme décrit précédemment et active les sorties SCA(K) ou SCB(K), selon un ordre prédéterminé, croissant de 1 à N pour une augmentation de luminosité ou décroissant de N à 1 pour une diminution de luminosité, ceci directement selon l'action manuelle sur PA ou PB ou à intervalles réguliers cadencés par l'horloge interne H, en fonction de la mesure d'éclairement donné par CL, comme décrit pour le premier mode d'exécution.

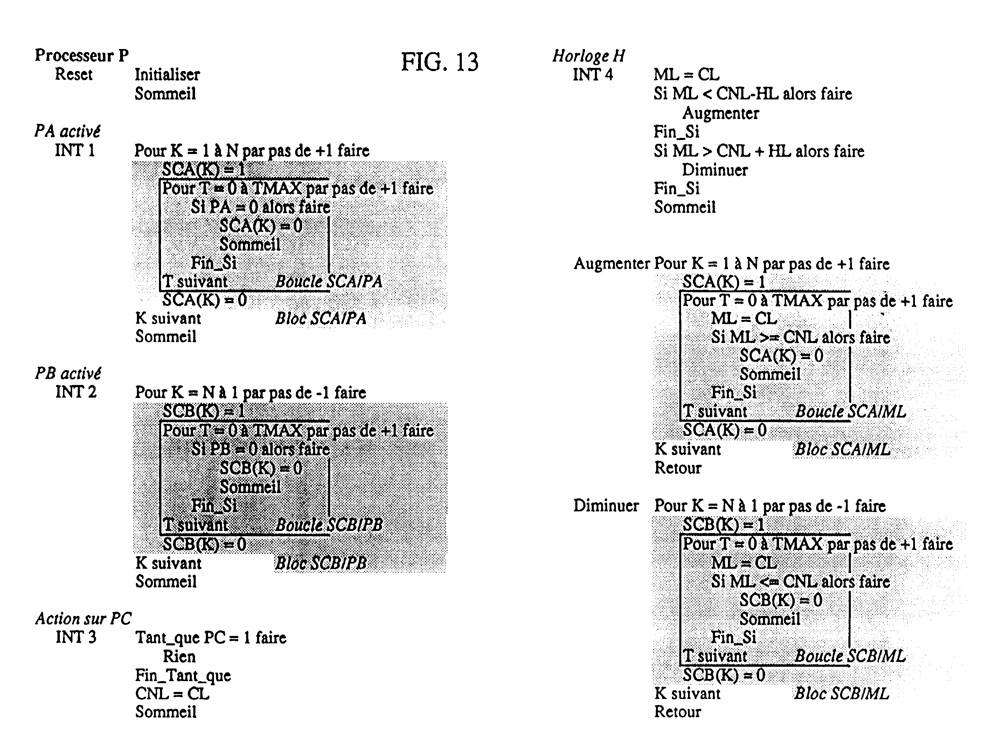

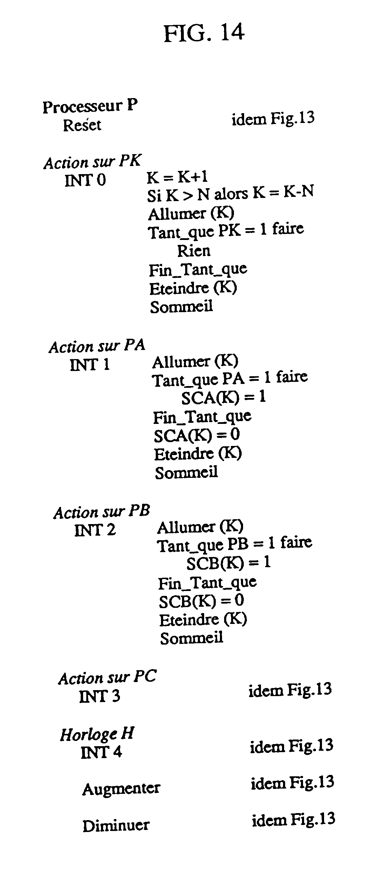

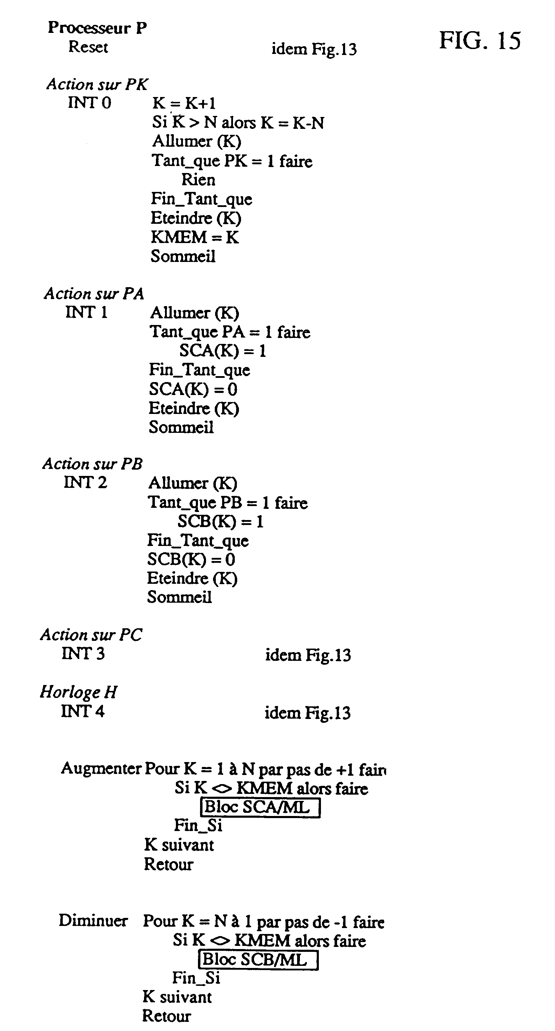

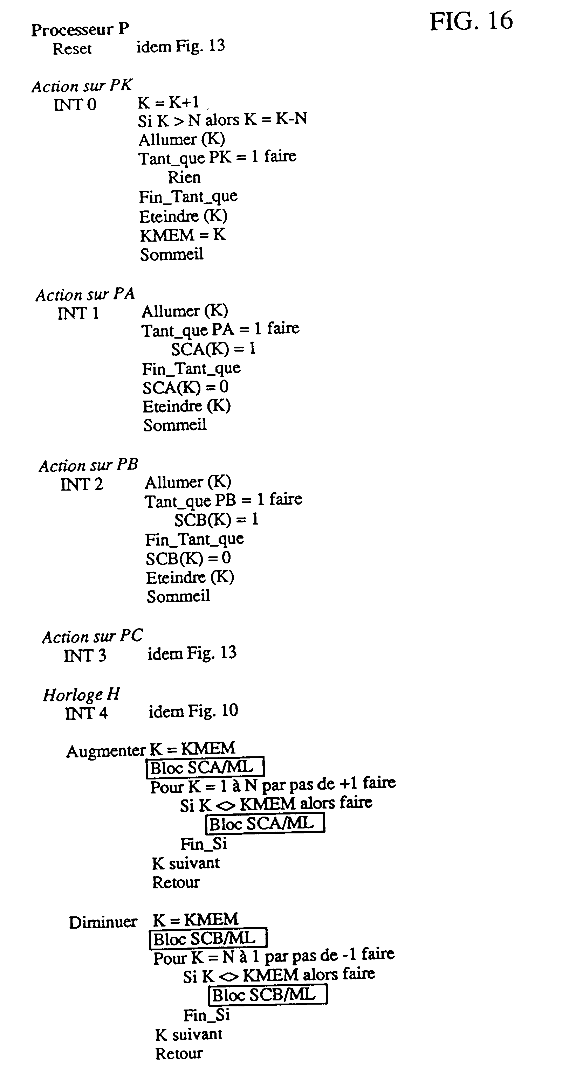

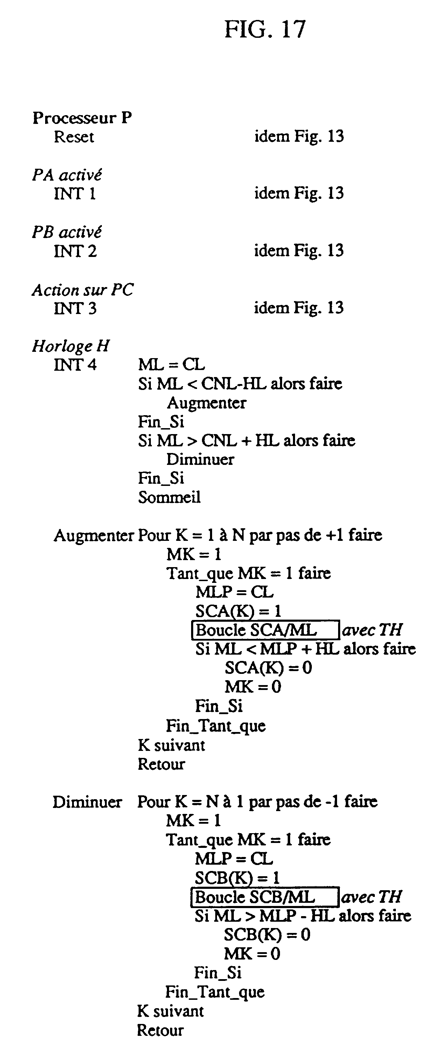

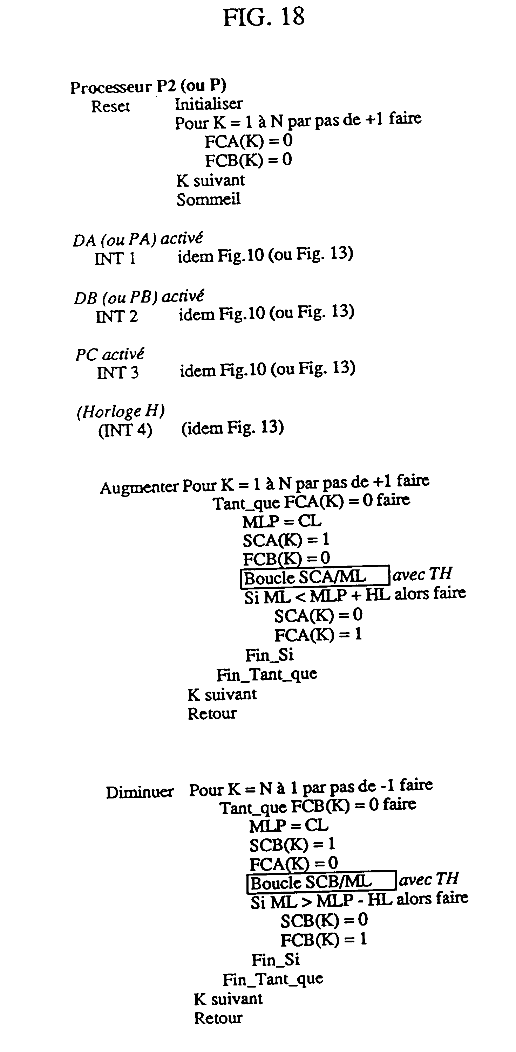

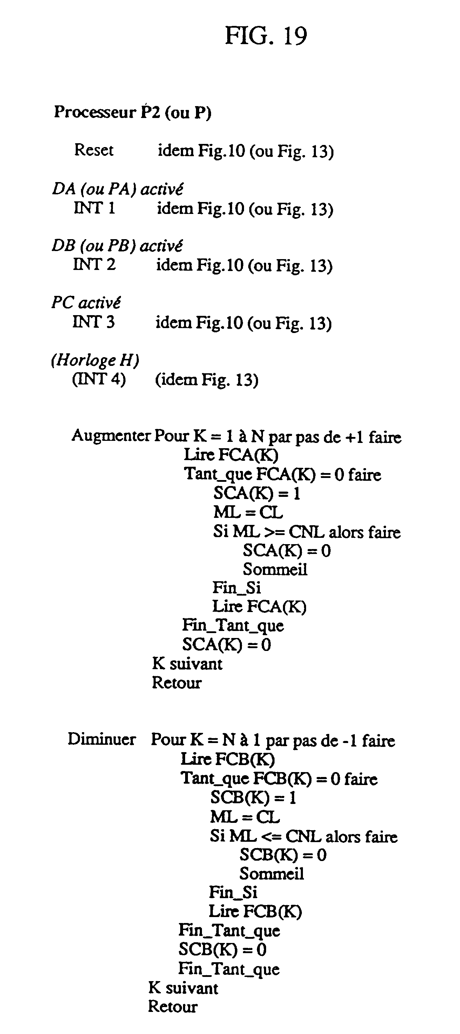

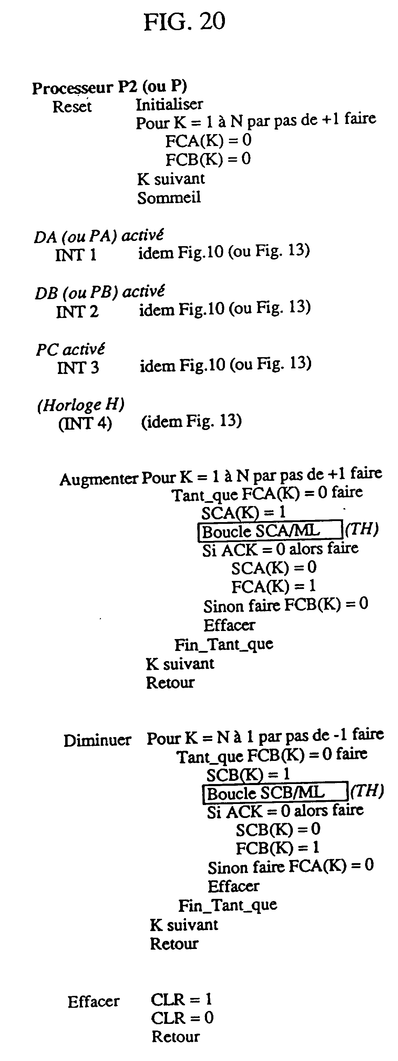

Dans une version programmée, ces actions sont obtenues par activation du programme bloc SCA/PA (figure 13) pour K variant éventuellement de 1 à N lors d'une demande manuelle de plus d'éclairement PA, ou des programmes bloc SCB/PB pour K variant éventuellement de N à 1 lors d'une demande manuelle de moins d'éclairement PB, ou par activation des procédures "Augmenter" ou "Diminuer" lors d'une correction automatique du niveau lumineux, la procédure Augmenter activant le bloc SCA/ ML pour K variant éventuellement de 1 à N lors d'une détection automatique d'un niveau lumineux insuffisant, la procédure Diminuer activant le bloc SCB/ML pour K variant éventuellement de N à 1 lors d'une détection d'un niveau lumineux trop important. Le logiciel est détaillé en langage d'analyse à la figure 13.

Le troisième mode d'exécution, représenté partiellement à la figure 5, est dérivé du mode précédent. Le processeur P dispose d'une entrée logique supplémentaire PK activée par un contact manuel de même nom et de N sorties logiques L(K) raccordées à des voyants de type LED ou autre affichant le moyen M(K) commandé. Une impulsion sur la touche PK permet de passer de la commande d'un moyen M(K) au moyen suivant M(K+1).

Le logiciel de ce troisième mode d'exécution est donné à la figure 14 en langage d'analyse.

Selon une première variante du troisième mode d'exécution, le programme (ou le câblage logique) du processeur P ignore, lors des commandes automatiques de correction de niveau lumineux, le moyen M(K) correspondant à la dernière commande manuelle appliquée, l'utilisateur étant censé vouloir imposer de façon permanente le degré d'ouverture du moyen qu'il veut commander. Dans une version programmée, cette action est réalisée par mémorisation dans KMEM (figure 15) du numéro de moyen utilisé lors de la dernière commande manuelle, et modification des procédures Augmenter et Diminuer décrites en relation avec le deuxième mode d'exécution, le bloc SCA/ML ou SCB/ML n'étant activé que si K est différent de KMEM. Selon une deuxième variante du troisième mode d'exécution, le programme (ou le câblage logique) du processeur P agit en priorité, lors des commandes automatiques de correction du niveau lumineux, sur le moyen M(K) correspondant à la dernière commande manuelle appliquée, l'utilisateur étant censé désigner, en l'actionnant, le moyen d'occultation ou d'éclairage qu'il entend privilégier pour le contrôle du niveau lumineux.

Le logiciel correspondant à cette variante est donnée à la figure 16. La priorité décrite est réalisée par mémorisation dans KMEM du numéro de moyen M(K) utilisé lors de la dernière commande manuelle, et modification des procédures Augmenter et Diminuer, le bloc SCA/ML ou SCB/ML étant tout d'abord activé pour la valeur KMEM.

Selon une variante applicable à tous les modes d'exécution décrits précédemment, le passage d'un moyen M(K) au moyen suivant, lors des commandes automatiques de correction du niveau lumineux, est effectué au bout d'une durée TH, dite temps de réaction, correspondant au temps nécessaires au moyen le plus lent pour provoquer une variation significative de l'éclairement, si une telle variation n'est pas détectée à l'issue de TH. On teste en permanence et successivement la réaction de chaque moyen pendant toute la durée de commande de ce moyen.

De manière à diminuer encore davantage le temps de réaction de l'ensemble, le passage d'un moyen M(K) au moyen suivant peut se faire au bout d'une durée TH(K) propre à chaque moyen, c'est-à-dire au temps nécessaire à chaque moyen pour provoquer une variation significative de l'éclairement.

La durée TH remplace TMAX dans les programmes ou câblages précédents. Cette durée est fixée par le constructeur. TH est beaucoup plus petit que TMAX, ce qui permet de diminuer le temps de réaction de l'ensemble. La figure 17 représente le module logiciel en langage d'analyse, d'une variante correspondante du deuxième mode d'exécution. MLP représente la valeur d'éclairement CL enregistrée avant la mise en oeuvre de la commande.

Selon une variante d'exécution du premier ou du deuxième mode d'exécution, les états logiques FCA(K) et FCB(K) caractérisant, à l'état actif (1), les moyens M(K) détectés comme arrivés en saturation (fin de course) haute ou basse, sont mémorisés dans deux tables ou par un câblage de bascules, de façon à ne pas solliciter ces moyens lors de nouvelles commandes de même sens, et ainsi diminuer le temps de réaction de l'ensemble. La détection de l'état saturé d'un moyen est effectué par analyse de la réponse lumineuse provoquée par la commande du moyen. La mesure de l'éclairement à un instant donné est comparée à la mesure faite à un instant précédent, décalé d'une durée au moins égale au temps de réaction TH du moyen. Un écart inférieur au seuil HL, ou à une autre valeur prédéterminée, ou ne correspondant pas au sens d'activation du moyen, provoque le positionnement de FCA ou FCB, avant passage au moyen M(K) suivant.

Le module logiciel de cette variante est représenté en langage d'analyse à la figure 18.

Les procédures INT1, INT2, INT3 sont les mêmes qu'à la figure 10 ou à la figure 13. Dans le cas où la variante est appliquée au second mode d'exécution, la procédure INT4 est la même qu'à la figure 13.

Dans un quatrième mode d'exécution, les moyens d'occultation et d'éclairage M(K) disposent chacun de deux sorties logiques FCA(K) et FCB(K), comme représenté à la figure 6, ces sorties logiques indiquant respectivement, à partir de capteurs disposés sur les moyens, l'arrivée du moyen M(K) en saturation haute ou basse (fin de course). Ces sorties sont raccordées à des entrées du même nom du processeur P2 ou P dans le cas d'un processeur unique, par des liaisons bifilaires.

La figure 19 donne le logiciel de ce quatrième mode d'exécution. Par rapport au logiciel de la figure 18, ce logiciel diffère en ce que les variables FCA(K) et FCB(K) sont remplacées par les états lus sur les sorties FCA(K) et FCB(K).

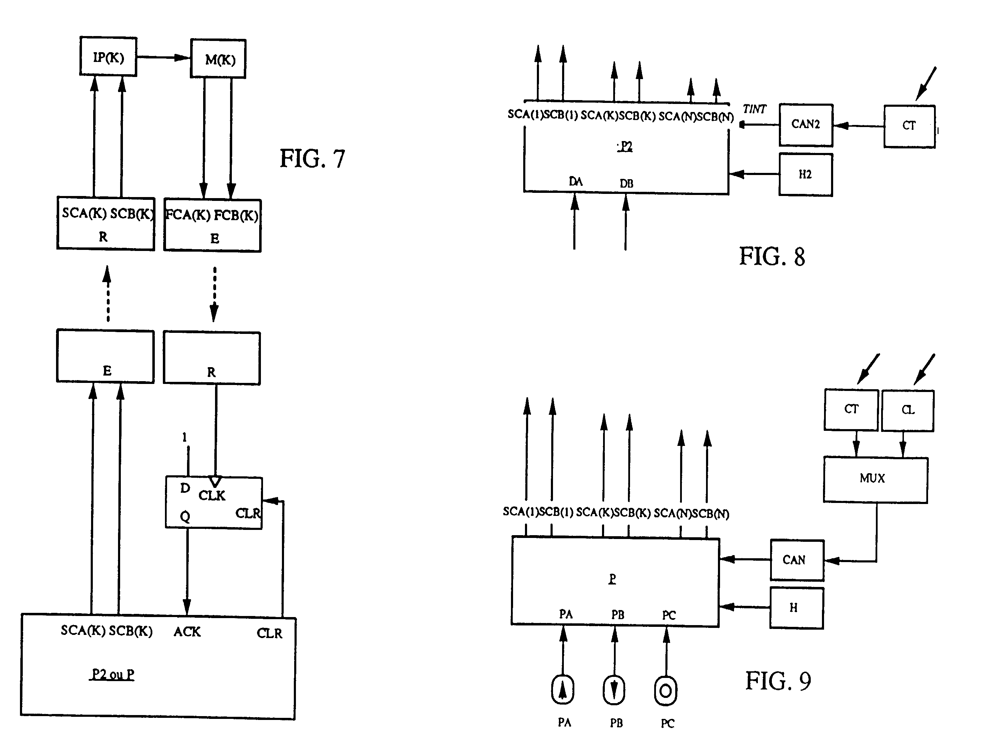

Selon une cinquième forme d'exécution représentée à la figure 7, le processeur P2 ou le processeur unique P est associé à un émetteur E dont les signaux sont reçus par des récepteurs R associés individuellement à chacun des moyens commandés M(K) par l'intermédiaire d'interfaces IP(K). Chaque récepteur présente deux sorties SCA(K) et SCB(K) commandant, comme précédemment, l'ouverture, respectivement la fermeture du moyen M(K).

Chaque moyen M(K) est équipé comme précédemment de capteurs indiquant les états de saturation haute ou basse FCA(K) et FCB(K), et relié à un émetteur E transmettant un signal actif unique, tant que le moyen commandé est actif et répond effectivement à une commande SCA(K) ou SCB(K), à un récepteur R associé au processeur P2 ou P par l'intermédiaire d'une bascule D délivrant un signal d'acquisition ACK. Les variables SCA(K) et SCB(K) sont élaborées par le processeur P2, respectivement P, à partir du constat de l'absence de réception du signal ACK après une durée TH lors de l'application d'une commande SCA ou SCB. Le logiciel correspondant est représenté à la figure 20. Les procédures concernées sont les procédures Augmenter et Diminuer. On a en outre la procédure complémentaire "Effacer" en raison de la présence de la bascule D.

Dans tous les modes d'exécution précédents, il est possible de prévoir une modification par l'utilisateur de l'ordre hiérarchique des moyens M(K) à l'aide de clés de configurations implantées en entrée sur le processeur P1 ou P. Dans une version programmée, ceci peut être réalisée en faisant correspondre un numéro de moyen effectif KEFF au numéro K et en actionnant des sorties SCA(KEFF) et SCB(KEFF) au lieu des sorties SCA(K) et SCB(K), ce qui est accompli, lors de chaque affectation d'une nouvelle valeur à K par la lecture du numéro effectif KEFF dans une table.

Dans tous les modes d'exécution précédents, il est possible de prévoir des moyens additionnels, par exemple un commutateur, pour supprimer la correction automatique du niveau lumineux.

Un sixième mode d'exécution est représenté partiellement à la figure 8. Ce mode d'exécution est dérivé du premier mode d'exécution représenté à la figure 3. Le processeur P2 est raccordé à une sonde de mesure de température CT mesurant la température intérieure TINT appliquée au processeur P2 par l'intermédiaire d'un convertisseur analogique-numérique CAN2. Pour le reste, le schéma est le même que celui de la figure 3. Dans ce sixième mode d'exécution les moyens d'occultation et d'éclairage sont différenciés selon trois types M1, M2 et M3, M1 étant une enveloppe agissant simultanément sur les plans thermiques et lumineux, par exemple un volet extérieur, M2 étant un moyen d'occultation agissant sur l'entrant lumineux et de faible incidence thermique, par exemple un store vénitien, et M3 étant un moyen d'éclairage artificiel à gradateur, de faible incidence thermique.

Le processeur P2 compare, à chaque activation de l'horloge H2 (ou d'une horloge spécifique HST) la température TINT à une température de seuil TSEUIL pour élaborer une consigne de position ALPHA du ou des moyens M1.

La température TSEUIL peut être choisie ou élaborée selon différents critères.

Selon un mode d'exécution, la température TSEUIL correspond en hiver à une valeur de plusieurs degrés supérieure à la consigne du moyen de chauffage installé dans le local, mais reste néanmoins inférieure ou égale au maximum de la plage de confort thermique, et en été à une valeur de plusieurs degrés inférieure à la consigne du moyen de climatisation installé dans le local, mais restant supérieure ou égale au minimum de la plage de confort thermique.

Selon un autre mode d'exécution des valeurs de TSEUIL sont préenregistrées ou déterminées par des potentiomètres, un commutateur été-hiver raccordé à une entrée logique du processeur P2 assurant la lecture de l'une ou l'autre des valeurs enregistrées ou placées.

Selon un autre mode d'exécution la valeur TSEUIL est élaborée à partir d'une température extérieure TEXT fournie par une sonde de température extérieure raccordée à P2 selon un algorithme simple du type
- TSEUIL =: 24°C si TEXT < 18°c
- TSEUIL =: 18°C si TEXT > 24°C.

La consigne de position ALPHA du moyen M1 est élaborée à partir de la comparaison de TINT à TSEUIL, ALPHA ne prenant que les deux valeurs suivantes
ALPHA = 1 (consigne d'ouverture totale de M1) si TINT < TSEUIL-HT
ALPHA = 0 (consigne de fermeture totale de M1) si TINT > TSEUIL+HT
HT représente l'hystérésis de température.

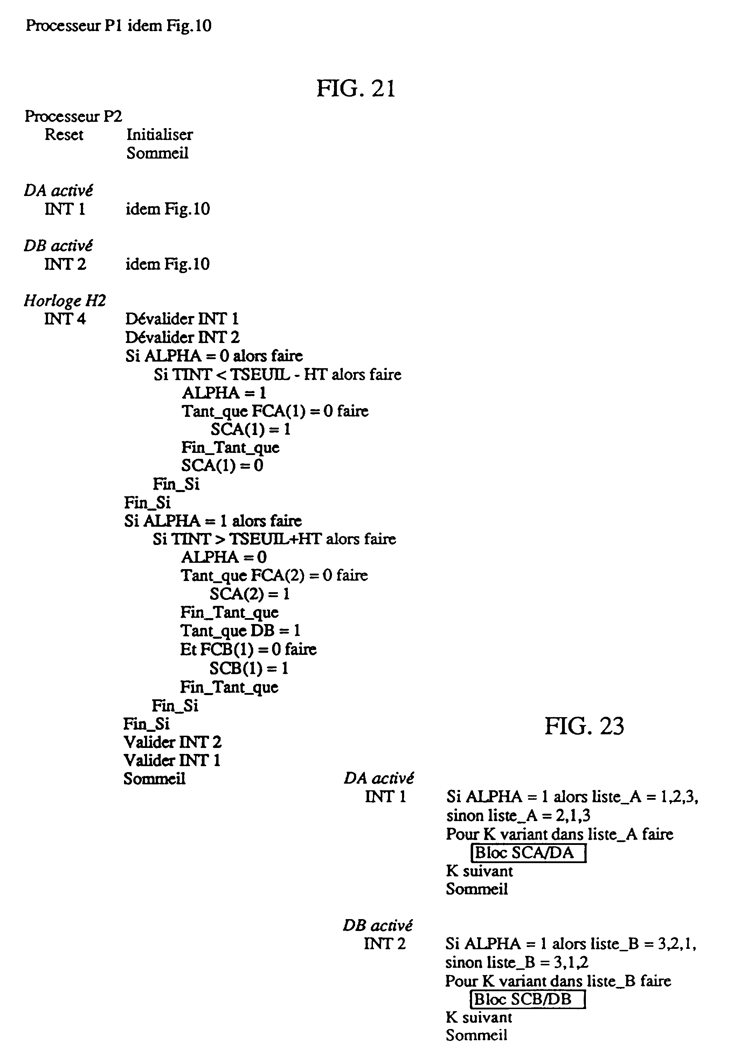

Une consigne ALPHA = 1 produit une séquence de commande SCA(1) destinée à satisfaire totalement cette consigne, alors qu'une consigne ALPHA = 0 provoque au préalable une ouverture complète du moyen M2, violant ainsi provisoirement le critère du confort lumineux, puis l'ordre de fermeture de M1 par la séquence de commande SCB (1), cette ordre de fermeture cessant dès que la demande de moins d'éclairement disparaît. Le logiciel correspondant est donné par la figure 21.

La configuration d'un septième mode d'exécution est représenté partiellement à la figure 9. La partie non représentée est identique à la partie supérieure de la figure 4. Le signal de la sonde de mesure de température intérieure CT et le signal de la sonde de lumière CL sont appliqués à travers un circuit de multiplexage MUX au convertisseur analogique-numérique CAN.

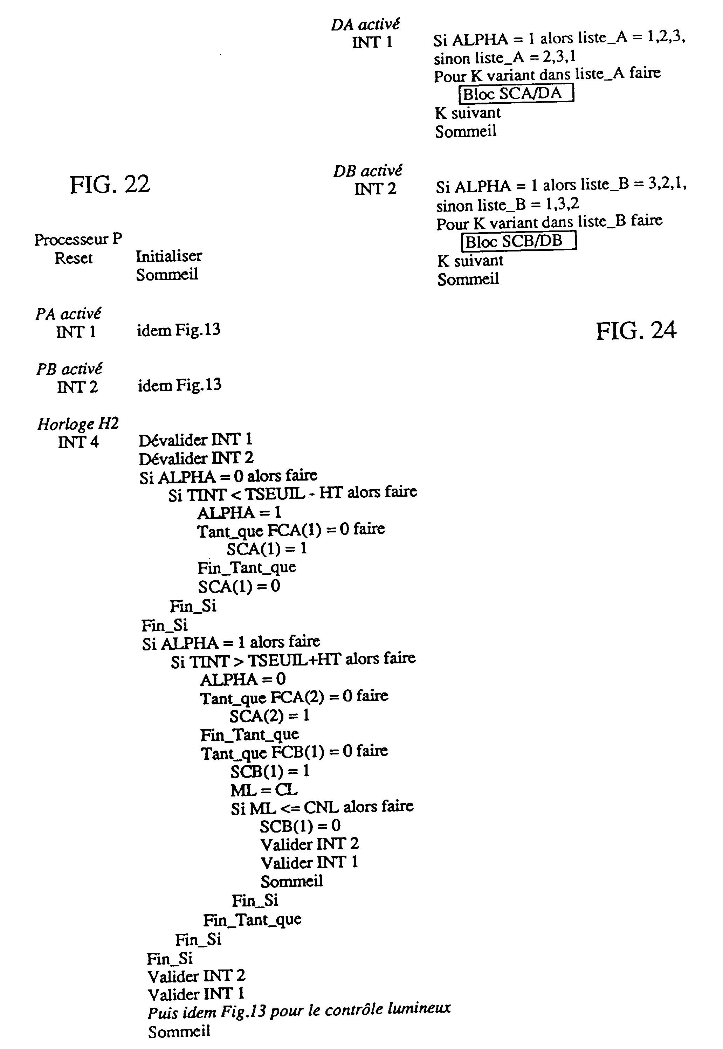

La consigne de position ALPHA du moyen M1 est élaborée comme précédemment à partir de la comparaison de TINT à TSEUIL et peut prendre les mêmes valeurs. Une consigne ALPHA = 1 produit une séquence de commande SCA (1) destinée à satisfaire totalement cette consigne, alors qu'une consigne ALPHA = 0 provoque au préalable l'ouverture complète du moyen M2, violant ainsi provisoirement le critère de confort lumineux puis l'ordre de fermeture de M1 par la commande SCB (1), cet ordre de fermeture cessant dès qu'un niveau de lumière inférieur ou égal à la consigne CNL est détecté. Le logiciel correspondant est donné par la figure 22.

Selon une variante des sixièmes et septièmes modes d'exécution, il est prévu que, lors des corrections automatiques du niveau lumineux, une demande d'augmentation de celui-ci a pour effet de solliciter les moyens M1, M2, M3
dans l'ordre M1, M2, M3 si ALPHA = 1
et dans l'ordre M2, M1, M3 si ALPHA = 0
et une demande de diminution du niveau lumineux a pour effet de solliciter les moyens
dans l'ordre M3, M2, M1, si ALPHA = 1
et dans l'ordre M3, M1, M2 si ALPHA = 0
afin de n'utiliser les moyens d'éclairage artificiel qu'en dernier recours
Dans une version programmée ceci est réalisé par la lecture des valeurs successives de K dans une liste prédéfinie. La figure 23 donne le module logiciel correspondant pour le cas où l'installation comporte deux processeurs P1 et P2, c'est-à-dire dans la configuration représentée à la figure 8.

Selon une variante d'exécution du sixième mode d'exécution, la consigne de position ALPHA est d'abord satisfaite, afin d'optimiser l'économie d'énergie, dans le cas où il est moins pénalisant d'utiliser l'éclairage électrique que de se priver d'un contrôle thermique optimum.

Lors des corrections automatiques de niveau lumineux, une demande d'augmentation de celui-ci a pour effet de solliciter les moyens dans l'ordre
M2, M3, M1 si ALPHA = 0
et M1, M2, M3 si ALPHA = 1
et une demande de diminution de niveau lumineux a pour effet de solliciter les moyens dans l'ordre
M1, M3, M2 si ALPHA = 0
et M3, M2, M1 si ALPHA = 1.

Le logiciel correspondant est représenté à la figure 24.

Selon une autre variante du sixième mode d'exécution, dans une configuration selon la figure 8, la consigne de position ALPHA est analogique. A cet effet le moyen M1 est muni d'un capteur de position donnant la valeur mesurée M_ALPHA de l'ouverture du moyen M1, directement accessible par le processeur P2 (logique câblé) ou à l'aide d'un convertisseur analogique-numérique (version programmée). La valeur analogique de consigne ALPHA est calculée à partir de l'écart entre TINT et TSEUIL selon une loi de correction automatique classique, par exemple, proportionnelle ou utilisant le traitement d'ensembles flous, ou de variables symboliques.

On tient compte d'un seuil d'hystérésis HA destiné à éviter de solliciter trop fréquemment le moyen M1.

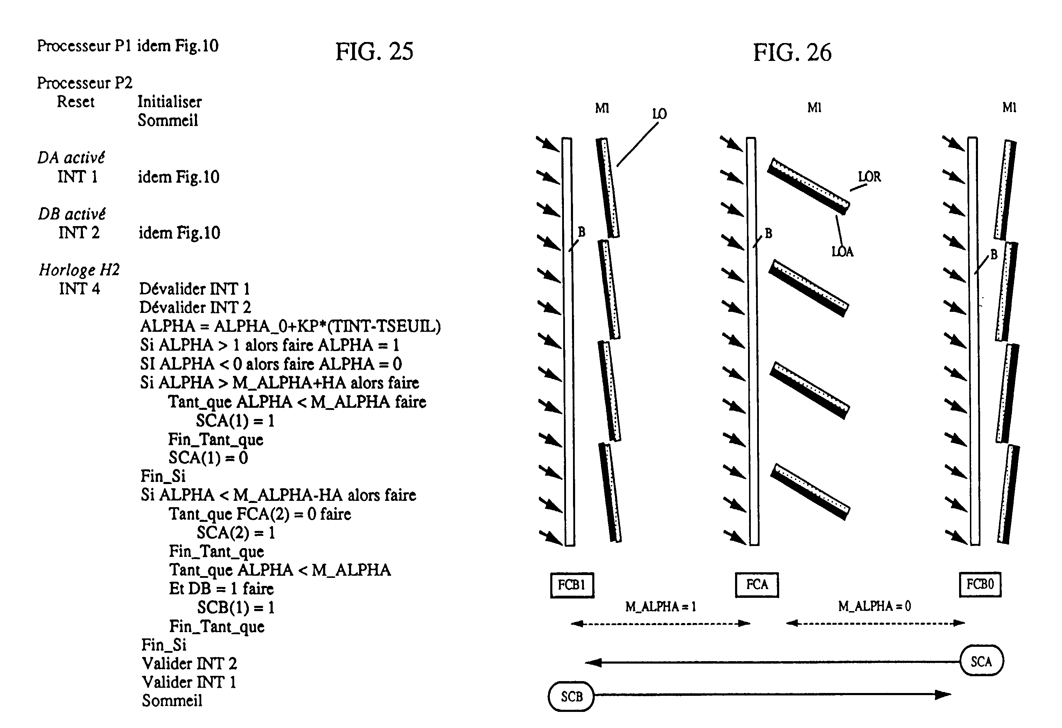

Une consigne ALPHA supérieure à M_ALPHA + HA produit une séquence de commande SCA(1) destinée à satisfaire totalement la consigne, alors qu'une consigne ALPHA inférieur à M_ALPHA_HA provoque au préalable l'ouverture complète du moyen M2 violant ainsi provisoirement le critère de confort lumineux, puis l'ordre de fermeture de M1 par la commande SCB(1). Pendant ce positionnement la commande de descente du moyen M1 est interrompue dès que la demande de moins d'éclairement DB disparaît. Le logiciel correspondant est donné par la figure 25.

Dans une configuration à un seul processeur P l'ordre de fermeture de M1 par SCB(1) cesse dès qu'un niveau de lumière inférieur ou égal à la consigne CNL est détecté.

Selon une variante d'exécution du mode précédent, à un ou deux processeurs, une demande d'augmentation du niveau lumineux, lors des corrections automatiques, a pour effet de solliciter les moyens dans l'ordre M1, M2, M3 si ALPHA supérieur à M_ALPHA, et dans l'ordre M2, M1, M3 si ALPHA inférieur à M_ALPHA, tandis qu'une demande de diminution du niveau lumineux a pour effet de solliciter les moyens dans l'ordre M3, M2, M1 si ALPHA supérieur à M_ALPHA et dans l'ordre M3, M1, M2 si ALPHA inférieur à M_ALPHA, afin de n'utiliser l'éclairage artificiel qu'en dernier recours.

Selon une autre variante du mode d'exécution précédent, le moyen M1 est à nouveau muni d'un capteur de position au moyen duquel est obtenue une consigne de position ALPHA analogique calculée à partir de l'écart entre TINT et TSEUIL. La consigne est d'abord satisfaite afin d'optimiser l'économie d'énergie, dans le cas où il est moins pénalisant d'utiliser l'éclairage électrique que de se priver d'un contrôle thermique optimum. Lors des corrections automatiques de niveau lumineux, une demande d'augmentation de celui-ci a pour effet de solliciter les moyens dans l'ordre :
M2, M3, M1 si ALPHA < M_ALPHA
et M1, M2, M3 si ALPHA > M_ALPHA

Une demande de diminution du niveau lumineux a pour effet de solliciter les moyens dans l'ordre :
M1, M3, M2 si ALPHA < M_ALPHA
et M3, M2, M1 si ALPHA > M_ALPHA

Selon un huitième mode d'exécution, le moyen M1 est un moyen d'occultation interne muni de lames orientables représenté schématiquement à la figure 26, les lames LO présentent un comportement thermique et lumineux différent sur les deux faces, l'une des faces LOR étant partiellement ou totalement réfléchissante et l'autre face LOA partiellement ou totalement absorbante. Il est prévu trois indicateurs témoins de saturation FCA(1), FCB1(1) et FCBO(1), élaborés par exemple de façon analogique, par analyse des variations d'éclairement comme à la figure 18 ou de façon mécanique ayant respectivement pour signification ouverture maximum des lames, et fermeture des lames, côté absorbant face à la baie vitrée B, fermeture des lames, côté réfléchissant face à la baie vitrée B.

L'application d'une commande SCA(1)=1 permet, à partir d'un état initial FCBO(1)=1, de passer successivement de FCBO à FCA puis à FCB1, alors que l'application d'une commande SCB(1)=1 permet, à partir d'un état initial FCB1(1)=1, de passer successivement de FCB1 à FCA, puis à FCBO.

Il est prévu un détecteur de position, réalisé de façon physique ou logique, positionné lors du passage des lames de part et d'autre de la position d'ouverture maximum FCA et délivrant simplement deux valeurs 1 ou 0 soit:
M_ALPHA = 1 si les lames sont comprises entre FCA et FCB1
M_ALPHA = 0 si les lames sont comprises entre FCA et FCBO.

Le processeur peut ainsi savoir si c'est la face réfléchissante ou la face absorbante des lames qui est en regard de la baie vitrée.

L'installation distingue deux types de moyens M1 et M2, M2 étant un moyen d'éclairage artificiel à gradateur, de faible incidence thermique.

Le processeur P2 est raccordé à une sonde de mesure de température intérieure CT comme à la figure 8 et à chaque activation de l'horloge H2, il compare la température TINT à une température de seuil TSEUIL pour élaborer une consigne de position ALPHA du moyen M1. La température TSEUIL est élaborée selon l'un des modes décrits précédemment.

Une consigne de position ALPHA de M1 est élaborée par comparaison des TINT à TSEUIL, cette consigne pouvant prendre les valeurs logiques 1 ou 0, la valeur 1 correspondant à une consigne d'intervalle de positions des lames faces absorbantes en regard de la baie vitrée, c'est-à-dire dans une position entre FCA et FCB1, si TINT<TSEUIL-HT, la valeur 0 correspondant à un intervalle de positions des lames faces réfléchissantes en regard de la baie vitrée, c'est-à-dire dans une position entre FCA et FCBO, si TINT>TSEUIL+HT.

Une séquence de contrôle thermique détermine la valeur de ALPHA, puis positionne les lames jusqu'à ce que M_ALPHA = ALPHA s'il y a discordance entre ces deux valeurs. Les corrections automatiques, de même que les commandes manuelles, de niveau lumineux actionnent SCA(1) pour provoquer une diminution d'éclairement et SCB(1) pour provoquer une augmentation d'éclairement, lorsque M_ALPHA = 1, alors qu'elles actionnent SCB(1) pour provoquer une diminution d'éclairement et SCA(1) pour provoquer une augmentation d'éclairement lorsque M_ALPHA = 0.

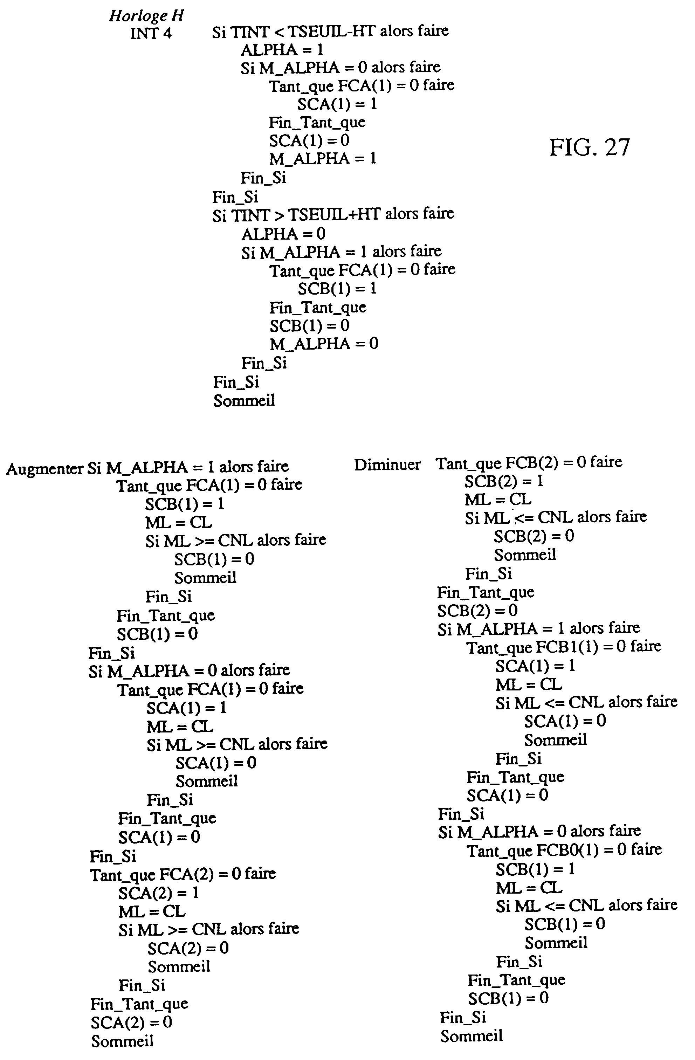

Le logiciel correspondant est donné par la figure 27. Afin de gagner de la place, les procédures INT1, INT2, INT3 n'ont pas été indiquées. Ces procédures peuvent être les mêmes que celles de la figure 10 ou 13 ou 14 ou 15 ou 16. ML représente la valeur d'éclairement CL mesurée à l'instant courant.

D'autres variantes d'exécution sont possibles. En particulier, la liaison galvanique entre les sondes CL et CT, d'une part, et les processeurs P, P1 et P2 peuvent être remplacés par des liaisons de toute nature.

Dans une variante simplifiée des sixième, septième et huitième modes, la consigne ALPHA est élaborée par simple copie de l'état d'un commutateur, ce qui supprime le recours au capteur de température CT et au convertisseur CAN 2 ou multiplexeur MUX.

## Revendications

1. Installation de commande du niveau d'éclairement d'un local pourvu d'au moins une ouverture permettant l'entrée de la lumière naturelle et équipé de moyens d'occultation de ladite ouverture et de moyens d'éclairage artificiel (M(1) à M(N), moyens associés à des opérateurs de commande (IP)1) à IP(N), cette installation comprenant des moyens photosensibles (CL) pour la mesure du niveau d'éclairement, des moyens de commande automatique (P1, P2; P) des opérateurs contrôlés par des moyens photosensibles en fonction d'une consigne d'éclairement, des moyens de réglage de la consigne constitués par des contacts (PA, PB, PC) actionnables manuellement et des moyens de stockage (P1, P2; P) de cette consigne, les moyens photosensibles et les moyens de réglage de la consigne étant associés dans un équipement mobile (C) destiné à être disposé dans la zone éclairée par l'ensemble des moyens d'occultation et d'éclairage artificiel, les moyens de commande automatique comprenant une unité logique de traitement (P, CAN, H; P1, CAN1, H1, P2, H2) reliée électriquement, par liaison galvanique ou non, aux moyens photosensibles (CL), aux contacts actionnables manuellement et aux opérateurs, l'unité logique de traitement étant programmée pour lire l'état des contacts et les valeurs mesurées par les moyens photosensibles et émettre des signaux de plus ou moins d'éclairement en direction des opérateurs, d'une part, en fonction de l'état desdits contacts (PA, PB) et, d'autre part, en fonction de l'écart entre la valeur de consigne et la valeur mesurée par les moyens photosensibles, et pour enregistrer, à un instant déterminé par l'utilisateur, une valeur d'éclairement mesurée par les moyens photosensibles, caractérisée en ce qu'elle comprend des moyens (P1, P2; P) pour assurer la commande successive et dans un ordre prédéfini des moyens d'occultation et des moyens d'éclairage, ces moyens de commande étant agencés de manière à ce qu'il passent d'un moyen (M(K) au moyen suivant (M(K±1) au bout d'une durée déterminée.

2. Installation selon la revendication 1, caractérisée en ce que lesdits moyens pour assurer la commande successive sont constitués par une seconde unité logique de traitement (P2) recevant des ordres d'une première unité logique de traitement (P1).

3. Installation selon la revendication 1, caractérisée en ce que lesdits moyens pour assurer la commande successive sont prévus dans une unité logique de traitement unique (P) reliée aux contacts actionnables manuellement (PA, PB, PC) et aux moyens photosensibles (CL).

4. Installation selon l'une des revendications 2 ou 3, caractérisée en ce que ladite durée déterminée (TMAX) pour passer d'un moyen au moyen suivant est identique pour chaque moyen et égal à la durée nécessaire au moyen le plus lent pour passer d'un état complètement ouvert à un état complètement fermé.

5. Installation selon l'une des revendications 2 ou 3, caractérisée en ce que la durée déterminée (TMAX(K)) pour passer d'un moyen au moyen suivant et propre à chaque moyen, un tableau de N constantes étant prévu à cet effet dans la mémoire de l'unité logique de traitement.

6. Installation selon l'une des revendications 2 ou 3, caractérisée en ce que la durée déterminée (TH) pour passer d'un moyen au moyen suivant est égale au temps nécessaire au moyen le plus lent pour provoquer une variation significative de l'éclairement.

7. Installation selon l'une des revendications 2 ou 3, caractérisée en ce que la durée déterminée (TH(K)) pour passer d'un moyen au moyen suivant est propre à chaque moyen, un tableau de N constantes étant prévu à cet effet dans la mémoire de l'unité logique de traitement.

8. Installation selon l'une des revendications 1 à 7, caractérisée en ce qu'elle comprend un contact (PK) actionnable manuellement permettant de passer volontairement de la commande d'un moyen (M) à la commande des moyens suivants, des moyens d'affichage (L(K)) étant prévus pour afficher le moyen commandé.

9. Installation selon la revendication 8, caractérisée en ce que l'unité logique de traitement est programmée ou câblée de telle manière qu'elle ignore, lors des commandes automatiques, le moyen (M(K)) correspondant à la dernière commande manuelle appliquée.

10. Installation selon la revendication 8, caractérisée en ce que l'unité logique de traitement est programmée ou câblée de telle manière qu'elle agit en priorité, lors des commandes automatiques, sur le moyen (M(K)) correspondant à la dernière commande manuelle appliquée.

11. Installation selon l'une des revendications 1 à 10, caractérisée en ce qu'elle comprend des moyens de détection et de mémorisation des états de saturation (FCA, FCB) des moyens d'occultation et d'éclairage (M), l'unité logique de traitement étant programmée de façon à ne pas solliciter les moyens (M(K)) en état de saturation lors de nouvelles commandes de même sens.

12. Installation selon la revendication 11, caractérisée en ce que lesdits moyens de détection sont constitués de moyens de comparaison qui comparent la mesure de l'éclairement à un instant donné à la mesure faite à un instant précédent décalé d'une durée au moins égale au temps de réaction (TH) du moyen (M(K)) et délivrant un signal de saturation lorsque l'écart entre les valeurs comparées est inférieur à une valeur déterminée ou ne correspond pas au sens d'activation du moyen (M(K)).

13. Installation selon la revendication 11, caractérisée en ce que lesdits moyens de détection comprennent des capteurs disposés sur les moyens (M) et reliés à l'unité logique de traitement par tout moyen, galvanique ou non, ces capteurs transmettant uniquement un signal de saturation (FCA, FCB).

14. Installation selon la revendication 11, caractérisée en ce que lesdits moyens de détection comprennent des capteurs disposés sur les moyens (M) et reliés à l'unité logique de traitement par tous moyens, galvaniques ou non, ces capteurs transmettant un signal continu d'acquisition (ACK) tant que le moyen commandé est actif et répond à une commande, les variables logiques de saturation (FCA, FCB) étant élaborées à partir du constat de l'absence de réception du signal d'acquisition (ACK) après une durée au moins égale au temps de réaction (TH) du moyen.

15. Installation selon l'une des revendications 1 à 14, caractérisée en ce qu'elle comprend des clés de configuration (CF) permettant à l'utilisateur de modifier l'ordre hiérarchique de commande des moyens (M).

16. Installation selon l'une des revendications 1 à 15, caractérisée en ce qu'elle comprend au moins deux sortes de moyens d'occultation (M1, M2) ayant des incidences thermiques différentes, éventuellement un moyen d'éclairage artificiel à gradateur (M3), une sonde de mesure de température (CT) mesurant la température intérieure (TINT) et des moyens de comparaison de cette température intérieure (TINT) à une température de seuil (TSEUIL), les moyens de commande automatique étant programmés pour élaborer une consigne de position (ALPHA) des moyens d'occultation à grande incidence thermique (M1) en fonction de l'écart mesuré par lesdits moyens de comparaison.

17. Installation selon l'une des revendications 1 à 15, caractérisée en ce qu'elle comprend au moins deux sortes de moyens d'occultation (M1, M2) ayant des incidences thermiques différentes, éventuellement un moyen d'éclairage artificiel à gradateur (M3), un commutateur à deux positions permettant d'affecter directement les valeurs 1 ou 0 à une consigne de position (ALPHA) des moyens d'occultation à grande incidence thermique (M1).

18. Installation selon la revendication 16 ou 17, comprenant deux processeurs (P1, P2) caractérisée en ce que les processeurs sont programmés de telle manière que ladite consigne de position (ALPHA) ne prend que les deux valeurs 1 ou 0 correspondant respectivement à une ouverture totale et à une fermeture totale, et qu'une consigne égale à 1 produit une séquence de commande (SCA(1)) destinée à la satisfaire totalement, alors qu'une consigne égale à 0 provoque au préalable l'ouverture complète du moyen d'occultation à faible incidence thermique (M2), puis l'ordre de fermeture (SCB(1)) du moyen d'occultation à forte incidence thermique (M1), lequel ordre cesse dès que la demande de moins de lumière (DB) disparaît.

19. Installation selon la revendication 16 ou 17, comprenant un seul processeur (P), caractérisée en ce que le processeur est programmé de telle manière que ladite consigne (ALPHA) ne prend que les deux valeurs 1 ou 0 correspondant respectivement à une ouverture totale et à une fermeture totale et qu'une consigne égale à 1 produit une séquence de commande (SCA(1)) destinée à la satisfaire totalement, alors qu'une consigne égale à 0 provoque au préalable l'ouverture complète du moyen d'occultation à faible incidence thermique (M2), puis l'ordre de fermeture SCB(1) du moyen d'occultation à forte incidence thermique (M1), lequel ordre cesse dès qu'un niveau de lumière inférieur ou égal à la consigne (CNL) est détecté.

20. Installation selon la revendication 18 ou 19, caractérisée en ce qu'une demande d'augmentation du niveau lumineux a pour effet de solliciter d'abord le moyen d'occultation à forte incidence thermique (M1), puis le moyen d'occultation à faible incidence thermique (M2) et enfin le moyen d'éclairage (M3), si la consigne de position (ALPHA) est égale à 1 et de solliciter d'abord le moyen d'occultation à faible incidence thermique (M2), puis le moyen d'occultation à forte incidence thermique (M1) et enfin le moyen d'éclairage (M3), si la consigne de position est égale à 0 et qu'une demande de diminution du niveau lumineux a pour effet de solliciter d'abord le moyen d'éclairage (M3), puis le moyen d'occultation à faible incidence thermique (M2) et enfin le moyen d'occultation à forte incidence thermique (M1), si la consigne est égale à 1 et de solliciter d'abord le moyen d'éclairage (M3), puis le moyen d'occultation à forte incidence thermique (M1) et enfin le moyen d'occultation à faible incidence thermique (M2), si la consigne est égale à 0.

21. Installation selon la revendication 18 ou 19, caractérisée en ce que cette consigne de position est d'abord satisfaite lors du contrôle thermique et qu'une demande d'augmentation du niveau lumineux a pour effet de solliciter d'abord le moyen d'occultation à faible incidence thermique (M2), puis le moyen d'éclairage (M3) et enfin le moyen d'occultation à forte incidence thermique (M1), si la consigne de position est égale à 0 et de solliciter d'abord le moyen d'occultation à forte incidence thermique (M1), puis le moyen à faible incidence thermique (M2) et enfin le moyen d'éclairage, (M3) si la consigne de position est égale à 1, et qu'une demande de diminution du niveau lumineux a pour effet de solliciter d'abord le moyen d'occultation à forte incidence thermique (M1), puis le moyen d'éclairage (M3) et enfin le moyen à faible incidence thermique (M2), si la consigne de position est égale à 0 et de solliciter d'abord le moyen d'éclairage (M3), puis le moyen d'occultation à faible incidence thermique (M2) et enfin le moyen d'occultation à forte incidence thermique (M1), si la consigne de position est égale à 1.

22. Installation selon la revendication 16 ou 17, comprenant deux processeurs (P1, P2), caractérisée en ce que le moyen d'occultation à forte incidence thermique (M1) est muni d'un capteur de position délivrant une valeur analogique (M_ALPHA) du degré d'ouverture de ce moyen, des moyens étant prévus pour calculer la valeur analogique de la consigne de position (ALPHA) selon une loi de correction d'automatique, et les processeurs étant programmés de manière à ce qu'une consigne de position (ALPHA) supérieure à la valeur analogique mesurée augmentée d'une valeur d'hystérésis produit une séquence de commande (SCA(1)) destinée à satisfaire totalement la consigne, alors qu'une consigne de position inférieure à la valeur analogique mesurée diminuée d'une valeur d'histeresis provoque au préalable l'ouverture complète du moyen d'occultation à faible incidence thermique (M2) et que la commande de la fermeture du moyen d'occultation à forte incidence thermique (M1) est interrompue pendant ce positionnement, dès que la demande (DB) de moins de lumière disparait.

23. Installation selon la revendication 16 ou 17, comprenant un seul processeur (P), caractérisée en ce que le moyen d'occultation à forte incidence thermique (M1) est muni d'un capteur de position délivrant une valeur analogique (M_ALPHA) de l'ouverture de ce moyen, des moyens étant prévus pour calculer la valeur analogique de la consigne (ALPHA) selon une loi de correction d'automatique, et le processeur étant programmé de manière à ce qu'une consigne de position supérieure à la valeur analogique, augmentée d'une valeur d'hystérésis, produit une séquence de commande (SCA(1) destinée à la satisfaire totalement, alors qu'une consigne de position inférieure à la valeur mesurée, diminuée d'une valeur d'hystérésis, provoque au préalable l'ouverture complète du moyen d'occultation à faible incidence thermique (M2), puis l'ordre de fermeture du moyen d'occultation à forte incidence thermique, lequel ordre cesse dès qu'un niveau lumineux inférieur ou égal à la consigne de niveau lumineux (CNL) est détecté.

24. Installation selon la revendication 16 ou 17, comprenant deux processeurs (P1, P2), caractérisée en ce que le moyen d'occultation à forte incidence thermique (M1) est muni d'un capteur de position délivrant une valeur analogique (M_ALPHA) du degré d'ouverture de ce moyen (M1), des moyens étant prévus pour calculer la valeur analogique de la consigne de position (ALPHA) selon une loi de correction d'automatique, et les processeurs étant programmés de manière à ce que lors de corrections automatiques de niveau lumineux, une demande d'augmentation du niveau lumineux a pour effet de solliciter d'abord le moyen d'occultation à forte incidence thermique (M1), puis le moyen d'occultation à faible incidence thermique (M2) et enfin le moyen d'éclairage (M3) si la consigne de position est supérieure à la valeur analogique mesurée (M_ALPHA), et de solliciter d'abord le moyen d'occultation à faible incidence thermique (M2) puis le moyen à forte incidence thermique (M1) et enfin le moyen d'éclairage (M3), si la consigne de position est inférieure à la valeur analogique mesurée, et qu'une demande de diminution du niveau lumineux a pour effet de solliciter d'abord le moyen d'éclairage (M3), puis le moyen d'occultation à faible incidence thermique (M2) et enfin le moyen d'occultation à forte incidence thermique (M1) si la consigne de position est supérieure à la valeur analogique mesurée, et de solliciter d'abord le moyen d'éclairage (M3), puis le moyen d'occultation à forte incidence thermique (M1) et enfin le moyen d'occultation à faible incidence thermique (M2), si la consigne de position est inférieure à la valeur analogique mesurée.

25. Installation selon la revendication 16 ou 17 comprenant deux processeurs (P1, P2), caractérisée en ce que le moyen d'occultation à forte incidence thermique (M1) est muni d'un capteur de position délivrant une valeur analogique (M_ALPHA) du degré d'ouverture de ce moyen, des moyens étant prévus pour calculer la valeur analogique de la consigne de position (ALPHA) selon une loi de correction d'automatique, et les processeurs étant programmés de manière à ce que la consigne de position soit d'abord satisfaite et que, lors de corrections automatiques du niveau lumineux, une demande d'augmentation du niveau lumineux a pour effet de solliciter d'abord le moyen d'occultation à faible incidence thermique (M2), puis le moyen d'éclairage (M3) et enfin le moyen d'occultation à forte incidence thermique (M1) si la consigne de position est inférieure à la valeur analogique mesurée (M_ALPHA), et de solliciter d'abord le moyen d'occultation à forte incidence thermique (M1), puis le moyen à faible incidence thermique (M2) et enfin le moyen d'éclairage (M3), si la consigne de position est supérieure à la valeur analogique mesurée, et qu'une demande de diminution du niveau lumineux a pour effet de solliciter d'abord le moyen d'occultation à forte incidence thermique (M1), puis le moyen d'éclairage (M3) et enfin le moyen d'occultation à faible incidence thermique (M2) si la consigne de position est inférieure à la valeur analogique mesurée, et de solliciter d'abord le moyen d'éclairage (M3), puis le moyen d'occultation à faible incidence thermique (M2) et enfin le moyen d'occultation à forte incidence thermique (M1), si la consigne de position est inférieure à la valeur analogique mesurée, et de solliciter d'abord le moyen d'éclairage (M3) , puis le moyen d'occultation à faible incidence thermique (M2) et enfin le moyen d'occultation à forte incidence thermique (M1), si la consigne de position est supérieure à la valeur analogique mesurée.

26. Installation selon l'une des revendications 1 à 15, dans laquelle les moyens d'occultation sont des moyens d'occultation internes du type à lames orientables (LO) dont l'une (LOA) des faces est essentiellement absorbante et l'autre face (LOR) essentiellement réfléchissante de la lumière, caractérisée en ce qu'elle comprend des moyens de détection et de mémorisation de trois états de saturation de position des lames, soit un état d'ouverture maximale (FCA(1)), un état de fermeture dans lequel la face absorbante est tournée vers l'extérieur (FCB1(1)) et un état de fermeture dans lequel la face réfléchissante est du côté de l'extérieur (FCB0(1)), l'unité logique de traitement étant programmée de telle manière qu'une commande de mouvement dans un premier sens (SCA(1)) permette, à partir d'un état initial, dans lequel les faces réfléchissantes des lames sont tournées vers l'extérieur, de passer successivement à l'état d'ouverture maximale, puis à l'état dans lequel les faces absorbantes sont tournées vers l'extérieur, alors qu'une commande de mouvement dans un deuxième sens (SCB(1)) permette, à partir d'un état initial dans lequel les faces absorbantes sont tournées vers l'extérieur, de passer successivement à l'état d'ouverture maximale, puis à l'état dans lequel les faces réfléchissantes sont tournées vers l'extérieur, des moyens étant prévus pour détecter et enregistrer le passage des lames de part et d'autre de la position d'ouverture maximale, la valeur enregistrée (M_ALPHA) étant 1 ou 0 selon que la lame passe d'un côté ou de l'autre de la position d'ouverture maximale, et
- soit un commutateur à deux positions permettant d'affecter directement une valeur 1 ou 0 à une consigne à position (ALPHA) du moyen d'occultation correspondant respectivement à l'intervalle de positions dans lequel les faces absorbantes sont tournées vers l'extérieur et à l'intervalle à positions dans lequel les faces réfléchissantes sont tournées vers l'extérieur;
- soit une sonde de mesure de température (CT) mesurant la température intérieure (TINT), l'unité logique de traitement étant programmée de telle manière que la température intérieure (TINT) est périodiquement comparée à une température de seuil (TSEUIL) pour l'élaboration d'une consigne de position (ALPHA) du moyen d'occultation telle qu'elle prend la valeur 1 ou 0 correspondant respectivement à l'intervalle de position dans lequel les faces absorbantes sont tournées vers l'extérieur et à l'intervalle de position dans lequel les faces réfléchissantes sont tournées vers l'extérieur, si la température intérieure est inférieure à la température de seuil, respectivement supérieure à la température de seuil et, pour positionner, dans l'un ou l'autre des cas précédents, les lames de manière à ce que la valeur détectée soit égale à la valeur de consigne de position, et pour activer l'une ou l'autre des sorties (SCA, SCB) lors des corrections automatiques ou manuelles du niveau d'éclairement, selon que la valeur de position (M_ALPHA) est 1 ou 0.

## Patentansprüche

1. Vorrichtung zur Steuerung des Beleuchtungsgrads eines Raums, welcher mit wenigstens einer Oeffnung, die den Eintritt von natürlichem Licht erlaubt, mit Mittel zur Verdeckung der genannten Oeffnung und mit Mittel zur künstlichen Beleuchtung (M(1) bis M(N)) versehen ist, wobei die Mittel zur Verdeckung der genannten Oeffnung und zur künstlichen Beleuchtung Steuerungsoperatoren (IP(1) bis IP(N)) zugeordnet sind, wobei diese Vorrichtung photosensible Mittel (CL) zur Messung des Beleuchtungsgrads, automatische, durch photosensible Mittel in Abhängigkeit eines Beleuchtungseinstellwerts kontrollierte Steuerungsmittel (P1, P2; P) der Operatoren, Mittel zur Regelung des Einstellwertes, welche aus von Hand betätigbaren Kontakte (PA, PB, PC) bestehen, und Mittel zur Speicherung (P1, P2; P) dieses Einstellwertes aufweist, wobei die photosensiblen Mittel und die Mittel zur Regelung des Einstellwertes in einer beweglichen Ausrüstung (C) einander zugeordnet sind, welche dazu vorgesehen ist, in der durch die gesamten Verdeckungsmittel und künstlichen Beleuchtungsmittel beleuchteten Zone angeordnet zu werden, wobei die automatischen Steuerungsmittel eine logische Einheit (P, CAN, H; P1, CAN1, H1, P2, H2) aufweist, die durch galvanischen oder nicht galvanischen Verbindungen mit den photosensiblen Mittel (CL), mit den von Hand betätigbaren Kontakte und mit den Operatoren elektrisch verbunden ist, wobei die logische Einheit programmiert ist, um den Zustand der Kontakte und die durch die photosensiblen Mittel gemessenen Werte zu lesen und um Signale für mehr oder weniger Beleuchtung in Richtung der Operatoren einerseits in Abhängigkeit vom Zustand der genannten Kontakte (PA, PB) und andererseits in Abhängigkeit vom Abstand zwischen dem Einstellwert und dem durch die photosensiblen Mittel gemessenen Wert zu senden und um einen durch die photosensible Mittel gemessenen Beleuchtungswert in einem vom Benutzer bestimmten Moment zu speichern, dadurch gekennzeichnet, dass sie Mittel (P1, P2; P) aufweist, die die sukzessive und in einer bestimmte Reihenfolge angeordnete Steuerung der Verdeckungs- und Beleuchtungsmittel gewährleistet, wobei diese Steuerungsmittel so angeordnet sind, dass sie nach einer bestimmten Zeit von einem Mittel (M(K)) zum folgenden Mittel (M(K+1)) übergehen.

2. Vorrichtung nach Anspruch 1, dadurch gekennzeichnet, dass die genannten Mittel, die die sukzessive Steuerung gewährleisten, aus einer zweiten logischen Einheit (P2) bestehen, welche von der ersten logischen Einheit (P1) Befehle bekommt.

3. Vorrichtung nach Anspruch 1, dadurch gekennzeichnet, dass die genannten Mittel, die die sukzessive Steuerung gewährleisten, in einer einzigen logischen Einheit (P) vorgesehen sind, welche mit den von Hand betätigbaren Kontakte und mit den photosensiblen Mittel (CL) verbunden ist.

4. Vorrichtung nach einem der Ansprüche 2 oder 3, dadurch gekennzeichnet, dass die genannte bestimmte Zeit (TMAX), um von einem Mittel zum folgenden Mittel überzugehen, für jedes Mittel gleich ist und gleich der Zeit ist, die für das langsamste Mittel nötig ist, um von einem offenen in einem geschlossenen Zustand überzugehen.

5. Vorrichtung nach einem der Ansprüche 2 oder 3, dadurch gekennzeichnet, dass die bestimmte Zeit (TMAX(K)), um von einem Mittel zum folgenden Mittel überzugehen, jedem Mittel eigen ist, wobei eine Tabelle von N Konstanten zu diesem Zweck im Speicher der logischen Einheit vorgesehen ist.

6. Vorrichtung nach einem der Ansprüche 2 oder 3, dadurch gekennzeichnet, dass die bestimmte Zeit (TH), um von einem Mittel zum folgenden Mittel überzugehen, gleich der Zeit ist, die für das langsamste Mittel nötig ist, um eine bedeutende Beleuchtungsänderung zu verursachen.

7. Vorrichtung nach einem der Ansprüche 2 oder 3, dadurch gekennzeichnet, dass die bestimmte Zeit (TH(K)), um von einem Mittel zum folgenden Mittel überzugehen, jedem Mittel eigen ist, wobei eine Tabelle von N Konstanten zu diesem Zweck im Speicher der logischen Einheit vorgesehen ist.

8. Vorrichtung nach einem der Ansprüche 1 bis 7, dadurch gekennzeichnet, dass sie einen von Hand betätigbaren Kontakt (PK) aufweist, welcher es erlaubt, freiwillig von der Steuerung eines Mittels (M) zur Steuerung der folgenden Mittel überzugehen, wobei Anzeigemittel (L(K)) vorgesehen sind, um das gesteuerte Mittel anzuzeigen .

9. Vorrichtung nach Anspruch 8, dadurch gekennzeichnet, dass die logische Einheit so programmiert oder verbindungsprogrammiert ist, dass sie bei den automatischen Steurungen nicht weiss, welches Mittel (M(K)) dem letzten von Hand durchgeführten Befehl entspricht.

10. Vorrichtung nach Anspruch 8, dadurch gekennzeichnet, dass die logische Einheit so programmiert oder verbindungsprogrammiert ist, dass sie bei automatischen Steuerungen vorrangig auf das Mittel (M(K)) wirkt, welches dem letzten von Hand durchgeführten Befehl entspricht.

11. Vorrichtung nach einem der Ansprüche 1 bis 10, dadurch gekennzeichnet, dass sie Mittel zur Erfassung und Speicherung der Sättigungszustände (FCA, FCB) der Verdeckungs- und Beleuchtungsmittel (M) aufweist, wobei die logische Einheit so programmiert ist, dass die sich in einem gesättigten Zustand befindenden Mittel (M(K)) bei neuen, gleich gerichteten Befehle nicht in Anspruch genommen werden.

12. Vorrichtung nach Anspruch 11, dadurch gekennzeichnet, dass die genannten Mittel zur Erfassung aus Vergleichsmittel bestehen, welche die Messung der Beleuchtung zu einem bestimmten Moment mit der an einem vorhergehenden Moment durchgeführten Messung vergleichen, wobei die zwei Messungen von einer Dauer versetzt sind, die wenigstens gleich der Reaktionszeit (TH) des Mittels (M(K)) ist, und wobei die Vergleichsmittel ein Sättigungssignal liefern, wenn der Abstand zwischen den verglichenen Werten kleiner als ein vorbestimmter Wert ist oder der Antriebsrichtung des Mittels (M(K)) nicht entspricht.

13. Vorrichtung nach Anspruch 11, dadurch gekennzeichnet, dass die genannten Erfassungsmittel auf den Mittel (M) angeordnete Sensoren aufweisen, die mit der logischen Einheit durch jedes galvanische oder nicht galvanische Mittel verbunden sind, wobei diese Sensoren nur ein Sättigungssignal (FCA, FCB) senden.

14. Vorrichtung nach Anspruch 11, dadurch gekennzeichnet, dass die genannten Erfassungsmittel auf den Mittel (M) angeordnete Sensoren aufweisen, die mit der logischen Einheit durch jedes galvanische oder nicht galvanische Mittel verbunden sind, wobei diese Sensoren ein kontinuierliches Erfassungssignal (ACK) senden, solange das gesteuerte Mittel tätig ist und einem Befehl antwortet, wobei die logischen Sättigungsgrössen (FCA, FCB) bei der Feststellung der Abwesenheit eines Empfangs des Erfassungssignals (ACK) nach einer Zeit hergestellt werden, die wenigstens gleich der Reaktionszeit (TH) des Mittels ist.

15. Vorrichtung nach einem der Ansprüche 1 bis 14, dadurch gekennzeichnet, dass sie Konfigurationsschlüssel (CF) aufweist, die es dem Benutzer erlauben, die Rangordnung der Steuerung der Mittel (M) zu ändern.

16. Vorrichtung nach einem der Ansprüche 1 bis 15, dadurch gekennzeichnet, dass sie wenigstens zwei Typen von Verdeckungsmittel (M1, M2), die verschiedene thermische Effekte bewirken, eventuell ein künstliches Beleuchtungsmittel mit Stufenschaltgerät (M3), einen Temperaturmessfühler (CT) für die Messung der inneren Temperatur (TINT) und Vergleichsmittel dieser inneren Temperatur (TINT) mit einer Schwellentemperatur (TSEUIL) aufweist, wobei die automatischen Steuerungsmittel programmiert sind, um einen Einstellwert der Stellung (ALPHA) der Verdeckungsmittel mit starkem thermischen Einfluss (M1) in Abhängigkeit des durch die Vergleichsmittel gemessenen Abstandes herzuleiten.

17. Vorrichtung nach einem der Ansprüche 1 bis 15, dadurch gekennzeichnet, dass sie wenigstens zwei Typen von Verdeckungsmittel (M1 M2), die verschiedene thermische Einflüsse bewirken, eventuell ein künstliches Beleuchtungsmittel mit Stufenschaltgerät (M3), einen Zweistellungswahlschalter aufweist, der es erlaubt, einem Einstellwert der Position (ALPHA) der Verdeckungsmittel mit starkem thermischen Einfluss (M1) direkt die Werte 1 oder 0 zuzuordnen.

18. Vorrichtung nach einem der Ansprüche 16 oder 17 mit zwei Prozessoren (P1, P2), dadurch gekennzeichnet, dass die zwei Prozessoren so programmiert sind, dass der genannte Einstellwert der Stellung (ALPHA) nur die Werte 1 oder 0 einnimmt, die einer Oeffnung, bzw. einem Verschluss entsprechen, und dass ein Einstellwert gleich 1 eine Befehlsequenz (SCA(1)) auslöst, die dazu vorgesehen ist, den Einstellwert ganz zu befriedigen, während ein Einstellwert gleich 0 zuvor die Oeffnung des Verdeckungsmittels mit schwachem thermischen Enfluss (M2) und dann den Befehl zur Schliessung des Verdeckungsmittels mit starkem thermischen Einfluss (M1) auslöst, wobei dieser Befehl abgebrocher wird, sobald die Nachfrage nach einer Verminderung des Beleuchtungsgrads (DB) verschwindet.

19. Vorrichtung nach einem der Ansprüche 16 oder 17 mit einem einzigen Prozessor (P), dadurch gekennzeichnet, dass der Prozessor so programmiert ist, das der genannte Einstellwert der Stellung (ALPHA) nur die zwei Werte 1 oder 0 einnimmt, welche einer Oeffnung, bzw. einem Verschluss entsprechen, und dass ein Einstellwert gleich 1 eine Befehlsequenz (SCA(1)) auslöst die dazu vorgesehen ist, ihn ganz zu befriedigen, während ein Einstellwert gleich 0 zuvor die Oeffnung des Verdeckungsmittels mit schwachem thermischen Einfluss (M2) und dann den Befehl zur Schliessung des Verdeckungsmittels mit starkem thermischen Einfluss (M1) auslöst, wobei dieser Befehl abgebrochen wird, sobald ein Beleuchtungsgrad, der gleich oder niedriger als der Einstellwert (CNL) ist, erfasst wird.

20. Vorrichtung nach einem der Ansprüche 18 oder 19, dadurch gekennzeichnet, dass eine Anfrage nach einer Erhöhung des Beleuchtungsgrads zuerst die Beanspruchung des Verdeckungsmittels mit starkem thermischen Einfluss (M1) dann des Verdeckungsmittels mit schwachem thermischen Einfluss (M2) und dann des Beleuchtungsmittels (M3) bewirkt, wenn der Einstellwert der Stellung (ALPHA) gleich 1 ist, und zuerst die Beanspruchung des Verdeckungsmittels mit schwachem thermischen Einfluss (M2) und dann des Verdeckungsmittels mit starkem thermischen Einfluss (M1) und endlich des Beleuchtungsmittels (M3) bewirkt, wenn der Einstellwert der Stellung gleich 0 ist, und dass eine Anfrage nach einer Verminderung des Beleuchtungsgrads zuerst die Beanspruchung des Beleuchtungsmittels (M3), dann des Verdeckungsmittels mit schwachem thermischen Einfluss (M2) und endlich des Verdeckungsmittels mit starkem thermischen Einfluss (M1) bewirkt, wenn der Einstellwert gleich 1 ist, und zuerst die Beanspruchung des Beleuchtungsmittels (M3), dann des Verdeckungsmittels mit starkem thermischen Einfluss (M1) und endlich des Verdeckungsmittels mit schwachem thermischen Einfluss (M2) bewirkt, wenn der Einstellwert gleich 0 ist.

21. Vorrichtung nach einem der Ansprüche 18 und 19, dadurch gekennzeichnet, dass dieser Einstellwert der Stellung zuerst bei der thermischen Kontrolle befriedigt wird und dass eine Anfrage nach einer Erhöhung des Beleuchtungsgrads zuerst die Beanspruchung des Verdeckungsmittels mit schwachem thermischen Einfluss (M2), und dann des Beleuchtungsmittels (M3), und endlich des Verdeckungsmittels mit starkem thermischen Einfluss (M1) bewirkt, wenn der Einstellwert der Stellung gleich 0 ist, und zuerst die Beanspruchung des Verdeckungsmittels mit starkem thermischen Einfluss (M1) und dann des Verdeckungsmittels mit schwachem thermischen Einfluss (M2) und endlich des Beleuchtungsmittels (M3) bewirkt, wenn der Einstellwert der Stellung gleich 1 ist, und dass eine Anfrage nach einer Verminderung des Beleuchtungsgrads zuerst die Beanspruchung des Verdeckungsmittels mit starkem thermischen Einfluss (M1), dann des Beleuchtungsmittels (M3), und endlich des Verdeckungsmittels mit schwachem thermischen Einfluss (M2) bewirkt, wenn der Einstellwert gleich 0 ist, und zuerst die Beanspruchung des Beleuchtungsmittels (M3), dann des Verdeckungsmittels mit schwachem thermischen Einfluss (M2) und endlich des Verdeckungsmittels mit starkem thermischen Einfluss (M1) bewirkt, wenn der Einstellwert gleich 1 ist.

22. Vorrichtung nach einem der Ansprüche 16 oder 17 mit zwei Prozessoren (P1, P2), dadurch gekennzeichnet, dass das Verdeckungsmittel mit starkem thermischen Einfluss (M1) mit einem Stellungssensor versehen ist, welcher einen analogen Wert (M_ALPHA) des Oeffnungsgrads dieses Mittels liefert, wobei Mittel vorgesehen sind, um den analogen Wert des Einstellwerts der Stellung (ALPHA) nach einem Gesetz der automatischen Korrektur zu rechnen, und wobei die Prozessoren so programmiert sind, dass ein Einstellwert der Stellung (ALPHA) grösser als der gemessene analoge Wert vergrössert um einen Hysteresiswert eine Befehlsequenz (SCA(1)) auslöst, welche dazu vorgesehen ist, den Einstellwert völlig zu befriedigen, während ein Einstellwert kleiner als der gemessene analoge Wert verkleinert um einen Hysteresiswert zuvor die Oeffnung des Verdeckungsmittels mit schwachem thermischen Einfluss (M2) auslöst, und dass der Befehl zur Schliessung des Verdeckungsmittels mit starkem thermischen Einfluss (M1) während dieser Positionnierung unterbrochen wird, sobald die Anfrage nach einer Verminderung des Beleuchtungsgrads (DB) verschwindet.

23. Vorrichtung nach einem der Ansprüche 16 oder 17 mit einem einzigen Prozessor (P), dadurch gekennzeichnet, dass das Verdeckungsmittel mit starkem thermischen Einfluss (M1) mit einem Stellungssensor versehen ist, welcher einen analogen Wert (M_{_}ALPHA) der Oeffnung dieses Mittels liefert, wobei Mittel vorgesehen sind, um den analogen Wert des Einstellwerts der Stellung (ALPHA) nach einem Gesetz der automatischen Korrektur zu rechnen, und wobei der Prozessor so programmiert ist, dass ein Einstellwert der Stellung (ALPHA) grösser als der gemessene analoge Wert vergrössert um einen Hysteresiswert eine Befehlsequenz auslöst, welche dazu vorgesehen ist, den Einstellwert völlig zu befriedigen, während ein Einstellwert der Stellung kleiner als der gemessene analoge Wert verkleinert um einen Hysteresiswert zuvor die Oeffnung des Verdeckungsmittels mit schwachem thermischen Einfluss (M2) und dann den Befehl zur Schliessung des Verdeckungsmittels mit starkem thermischen Einfluss auslöst, wobei dieser Befehl unterbrochen wird, sobald ein Beleuchtungsgrad, der gleich oder niedriger als der Beleuchtungsgradeinstellwert (CNL) ist, erfasst wird.

24. Vorrichtung nach einem der Ansprüche 16 oder 17 mit zwei Prozessoren (P1, P2), dadurch gekennzeichnet, dass das Verdeckungsmittel mit starkem thermischen Einfluss (M1) mit einem Stellungssensor versehen ist, welcher einen analogen Wert (M_ALPHA) des Oeffnungsgrads dieses Mittels liefert, wobei Mittel vorgesehen sind, um den analogen Wert des Einstellwerts der Stellung (ALPHA) nach einem Gesetz der automatischen Korrektur zu rechnen, und wobei die Prozessoren so programmiert sind, dass bei automatischen Korrekturen des Beleuchtungsgrads eine Anfrage nach einer Erhöhung des Beleuchtungsgrads zuerst die Beanspruchung des Verdeckungsmittels mit starkem thermischen Einfluss (M1), und dann des Verdeckungsmittels mit schwachem thermischen Einfluss (M2) und endlich des Beleuchtungsmittels (M3) bewirkt, wenn der Einstellwert der Stellung grösser als der gemessene analoge Wert (M_ALPHA) ist, und zuerst die Beanspruchung des Verdeckungsmittels mit schwachem thermischen Einfluss (M2) und dann des Verdeckungsmittels mit starkem thermischen Einfluss (M1) und endlich des Beleuchtungsmittels (M3) bewirkt, wenn der Einstellwert der Stellung kleiner als der gemessene analoge Wert ist, und dass eine Anfrage nach einer Verminderung des Beleuchtungsgrads zuerst die Beanspruchung des Beleuchtungsmittels (M3), und dann des Verdeckungsmittels mit schwachem thermischen Einfluss (M2), und endlich des Verdeckungsmittels mit starkem thermischen Einfluss (M1) bewirkt, wenn der Einstellwert grösser als der gemessene analoge Wert ist, und zuerst die Beanspruchung des Beleuchtungsmittels (M3), dann des Verdeckungsmittels mit starkem thermischen Einfluss (M1) und endlich des Verdeckungsmittels mit schwachem thermischen Einfluss (M2) bewirkt, wenn der Einstellwert kleiner als der gemessene analoge Wert ist.

25. Vorrichtung nach einem der Ansprüche 16 oder 17 mit zwei Prozessoren (P1, P2), dadurch gekennzeichnet, dass das Verdeckungsmittel mit starkem thermischen Einfluss (M1) mit einem Stellungssensor versehen ist, welcher einen analogen Wert (M_ALPHA) des Oeffnungsgrads dieses Mittels liefert, wobei Mittel vorgesehen sind, um den analogen Wert des Einstellwerts der Stellung (ALPHA) nach einem Gesetz der automatischen Korrektur zu rechnen, und wobei die Prozessoren so programmiert sind, dass der Einstellwert der Stellung zuerst befriedigt wird und dass bei automatischen Korrekturen des Beleuchtungsgrads eine Anfrage nach einer Erhöhung des Beleuchtungsgrads zuerst die Beanspruchung des Verdeckungsmittels mit schwachem thermischen Einfluss (M2), und dann des Beleuchtungsmittels (M3) und endlich des Verdeckungsmittels mit starkem thermischen Einfluss (M1) bewirkt, wenn der Einstellwert der Stellung niedriger als der gemessene analoge Wert (M_ALPHA) ist, und zuerst die Beanspruchung des Verdeckungsmittels mit starkem thermischen Einfluss (M1) und dann des Verdeckungsmittels mit schwachem thermischen Einfluss (M2) und endlich des Beleuchtungsmittels (M3) bewirkt, wenn der Einstellwert der Stellung grösser als der gemessene analoge Wert ist, und dass eine Anfrage nach einer Verminderung des Beleuchtungsgrads zuerst die Beanspruchung des Verdeckungsmittels mit starkem thermischen Einfluss (M1) und dann des Beleuchtungsmittels (M3), und endlich des Verdeckungsmittels mit schwachem thermischen Einfluss (M2) bewirkt, wenn der Einstellwert kleiner als der gemessene analoge Wert ist, und zuerst die Beanspruchung des Beleuchtungsmittels (M3), dann des Verdeckungsmittels mit schwachem thermischen Einfluss (M2) und endlich des Verdeckungsmittels mit starkem thermischen Einfluss (M1) bewirkt, wenn der Einstellwert grösser als der gemessene analoge Wert ist.

26. Vorrichtung nach einem der Ansprüche 1 bis 15, in welcher die Verdeckungsmittel interne Verdeckungsmittel der Art orientierbarer Lamellen (LO) sind, von denen die eine Seite (LOA) hauptsächlich lichtabsorbierend ist und die andere Seite (LOR) hauptsächlich rückstrahlend ist, dadurch gekennzeichnet, dass sie Mittel zur Erfassung und Speicherung von drei Sättigungszuständen der Stellung der Lamellen aufweist, das heisst einen Zustand der maximalen Oeffnung (FCA(1)), einen Verschlusszustand, in welchem die absorbierende Seite nach aussen gedreht ist, (FCB1(1)) und einen Verschlusszustand, in welchem die rückstrahlende Seite nach aussen zeigt, (FCB0(1)), wobei die logische Einheit so programmiert ist, dass der Befehl einer Bewegung in einer ersten Richtung (SCA(1)) es erlaubt, von einem Anfangszustand ausgehend, in welchem die rückreflektierende Seite der Lamellen nach aussen gedreht ist, sukzessiv in einen Zustand der maximalen Oeffnung und dann in den Zustand überzugehen, in welchem die absorbierende Seite der Lamelle nach aussen gedreht ist, während der Befehl einer Bewegung in einer zweiten Richtung (SCB(1)) es erlaubt, von einem Anfangszustand ausgehend, in welchem die absorbierende Seite der Lamelle nach aussen gedreht ist, sukzessiv zu einem Zustand der maximalen Oeffnung und dann zu einem Zustand überzugehen, in welchem die rückreflektierende Seite der Lamellen nach aussen gedreht ist, wobei Mittel zur Erfassung und Speicherung des Durchgangs der Lamellen von einer Seite zur anderen Seite der Stellung der maximalen Oeffnung vorgesehen sind, wobei der gespeicherte Wert (M_ALPHA) gleich 1 oder 0 ist, je nach dem die Lamellen auf eine Seite oder auf die andere Seite der Stellung der maximalen Oeffnung übergehen, und dass die Vorrichtung
- entweder einen Zweistellungswahlschalter, der es erlaubt, einen Wert 1 oder 0 direkt einem Einstellwert der Stellung des Verdeckungsmittels zuzuordnen, wobei diese Werte dem Stellungsintervall, in welchem die absorbierende Seite der Lamelle nach aussen gedreht ist, bzw. dem Stellungsintervall, in welchem die rückreflektierende Seite der Lamelle nach aussen gedreht ist, entsprechen;
- oder einen Temperaturmessfühler (CT) für die Messung der inneren Temperatur (TINT) aufweist, wobei die logische Einheit so programmiert ist, dass die innere Temperatur (TINT) periodisch mit der Schwellentemperatur (TSEUIL) verglichen wird, um einen Einstellwert der Stellung (ALPHA) des Verdeckungsmittels herzuleiten, welcher einen Wert 1 oder 0 einnimmt, der dem Stellungsintervall, in welchem die absorbierende Seite der Lamelle nach aussen gedreht ist, bzw. dem Stellungsintervall, in welchem die rückreflektierende Seite der Lamelle nach aussen gedreht ist, entspricht, wenn die innere Temperatur tiefer, bzw. höher als die Schwellentemperatur ist, und um im einen oder anderen vorherigen Fall die Lamellen so zu positionnieren, dass der erfasste Wert gleich dem Einstellwert der Stellung ist, und um den einen oder anderen Ausgang (SCA, SCB) bei den manuellen oder automatischen Korrekturen des Beleuchtungsgrads zu aktivieren, je nach dem der Einstellwert (M_ALPHA) gleich 1 oder 0 ist.

## Claims

1. Installation for controlling the lighting level of premises provided with at least one opening permitting entry of natural light and fitted with means of masking the said opening and with means of artificial lighting (M(1) to M(N)), means associated with control operators (IP(1) to IP(N)), this installation comprising photosensitive means (CL) for measuring the lighting level, means (P1, P2; P) of automatic control of the operators monitored by photosensitive means as a function of a lighting set point, means of adjusting the set point consisting of manually actuatable contacts (PA, PB, PC) and means (P1, P2; P) of storing this set point, the photosensitive means and the control means being associated within a mobile equipment(C) intended to be located in a zone which is illuminated by all of the masking means and the means of artificial lighting, the means of automatic control comprising a logic processing unit (P, CAN, H; P1, CAN1, H1, P2, H2) electrically connected, by galvanic link or otherwise, to the photosensitive means (CL) , to the manually actuatable contacts and to the operators, the logic processing unit being programmed to read the state of the contacts and the values measured by the photosensitive means and to emit signals for more or less lighting directed towards the operators, on the one hand as a function of the state of the said contacts ( PA, PB) and on the other hand as a function of the deviation between the set point value and the value measured by the photosensitive means, and to record, at an instant determined by the user, a lighting value measured by the photosensitive means, characterized in that it comprises means (P1, P2; P) of effecting successive control, in a predefined order, of the masking means and of the lighting means, these control means being arranged in such a way that they pass from one means (M(K)) to the next means (M(K±1)) after a specified duration.

2. The installation as claimed in claim 1, characterized in that the said means for effecting successive control consists of a second logic processing unit (P2) receiving orders from a first logic processing unit (P1).

3. The installation as claimed in claim 1, characterized in that said means for effecting successive control are provided in a single logic processing unit (P) connected to the manually actuatable contacts (PA, PB, PC) and to the photosensitive means (CL).

4. The installation as claimed in either one of claims 2 or 3, characterizedinthat said specified duration (TMAX) for passing from one means to the next means is identical for each means and equal to the duration required for the slowest means to pass from a completely open state to a completely closed state.

5. The installation as claimed in either one of claims 2 or 3, characterized in that the specified duration (TMAX) (K)) for passing from one means to the next means is specific to each means, a table of N constants being provided for this purpose in the memory of the logic processing unit.

6. The installation as claimed in either one of claims 2 or 3, characterized in that the specified duration (TH) for passing from one means to the next means is equal to the time required for the slowest means to bring about a significant variation in the lighting.

7. The installation as claimed in either one of claims 2 or 3, characterized in that the specified duration (TH) (K)) for passing from one means to the next means is specific to each means, a table of N constants being provided for this purpose in the memory of the logic processing unit.

8. The installation as claimed in one of claims 1 to 7, characterized in that it comprises a manually actuatable contact (PK) making it possible to pass at will from the control of one means (M) to the control of all the succeeding means, display means (L(K)) being provided for displaying that means controlled.

9. The installation as claimed in claim 8, characterized in that the logic processing unit is programmedor hardwired in such a way that, during automatic control, it is unaware of that means (M(K)) corresponding to the latest manual control applied.

10. The installation as claimed in claim 8, characterized in that the logic processing unit is programmed or hardwired in such a way that, during automatic control, it acts by priority on that means (M(K)) corresponding to the latest manual control applied.

11. The installation as claimed in one of claims 1 to 10, characterized in that it comprises means of detecting and storing the saturation states (FCA, FCB) of the means of masking and of lighting (M), the logic processing unit being programmed in such a way as not to call upon those means (M(K)) in a state of saturation during new controls of like direction.

12. The installation as claimed in claim 11, characterized in that said means of detection consist of means of comparison which compare the measurement of the lighting at a given instant with the measurement made at a preceding instant shifted by a duration at least equal to the reaction time (TH) of the means (M(K)) and delivering a saturation signal when the deviation between the compared values is less than a specified value or does not correspond to the direction of activation of the means (M(K)).

13. The installation as claimed in claim 11, characterized in that said means of detection comprise sensors arranged on the means (M) and connected to the logic processing unit by any means, galvanic or otherwise, these sensors transmitting solely a saturation signal (FCA, FCB).

14. The installation as claimed in claim 11, characterized in that said means of detection comprise sensors arranged on the means (M) and connected to the logic processing unit by any means, galvanic or otherwise, these sensors transmitting a continuous acquisition signal (ACK) while the controlled means is active and is responding to a control, the logical saturation variables (FCA, FCB) being formulated by noting the absence of receptior of the acquisition signal (ACK) after a duration at least equal to the reaction time (TH) of the means.

15. The installation as claimed in one of claims to 14, characterized in that it comprises configuration keys (CF) enabling the user to modify the hierarchical order of control of the means (M).

16. The installation as claimed in one claims 1 to 15, characterized in that it comprises at least two kinds of masking means (M1, M2) having different thermal incidences, possibly a means of artificial lighting with dimmer (M3), a temperature-measuring probe (CT) for measuring the inside temperature (TINT) and means of comparing this inside temperature (TINT) with a threshold temperature (TTHRESH), the means of automatic control being programmed to formulate a position set point (ALPHA) of the masking means with large thermal incidence (M1) as a function of the deviation measured by said means of comparison.

17. The installation as claimed in one of claims 1 to 15, characterized in that it comprises at least two kinds of masking means (M1, M2) having different thermal incidences, possibly a means of artificial lighting with dimmer (M3), a two-position switch making it possible directly to assign the values 1 or 0 to a position set point (ALPHA) of the masking means with large thermal incidence (M1).

18. The installation as claimed in claim 16 or 17, comprising two processors (P1, P2), characterized in that processors are programmed in such a way that said position set point (ALPHA) takes only the two values 1 or 0 corresponding to full opening and full closing respectively, and wherein a set point equal to 1 produces a control sequence (SCA(1)) intended to satisfy it fully, whereas a set point equal to 0 first of all brings about full opening of the masking means with low thermal incidence (M2), and then the order to close (SCB(1)) the masking means with high thermal incidence (M1), which order ceases as soon as the request for less light (DB) disappears.

19. The installation as claimed in claim 16 or 17, comprising a single processor (P), characterized in that theprocessor is programmed in such a way that said position set point (ALPHA) takes only the two values 1 or 0 corresponding to full opening and full closing respectively, and in that a set point equal to 1 produces a control sequence (SCA(1)) intended to satisfy it fully, whereas a set point equal to 0 first of all brings about full opening of the masking means with low thermal incidence (M2), and then the order to close (SCB(1)) the masking means with high thermal incidence (M1), which order ceases as soon as a light level less than or equal to the set point (CNL) is detected.

20. The installation as claimed in claim 18 or 19, characterized in that a request to increase the light level has the effect of calling upon firstly the masking means with high thermal incidence (M1), then the masking means with low thermal incidence (M2) and finally the lighting means (M3), if the position set point (ALPHA) is equal to 1 and of calling upon firstly the masking means with low thermal incidence (M2), then the masking means with high thermal incidence (M1) and finally the lighting means (M3), if the position set point is equal to 0 and wherein a request to decrease the light level has the effect of calling upon firstly the lighting means (M3), then the masking means with low thermal incidence (M2) and finally the masking means with high thermal incidence (M1), if the set point is equal to 1 and of calling upon firstly the lighting means (M3), then the masking means with high thermal incidence (M1) and finally the masking means with low thermal incidence (M2), if the set point is equal to 0.

21. The installation as claimed in claim 18 or 19, characterized in that this position set point is firstly satisfied during thermal monitoring and in that a request to increase the light level has the effect of calling upon firstly masking means with low thermal incidence (M2), then the lighting means (M3) and finally the masking means with high thermal incidence (M1), if the position set point is equal to 0 and of calling upon firstly the masking means with high thermal incidence (M1) then the means with low thermal incidence (M2) and finally the lighting means (M3), if the position set point is equal to 1, and in that a request to decrease the light level has the effect of calling upon firstly the masking means with high thermal incidence (M1) then the lighting means (M3) and finally the means with low thermal incidence (M2), if the position set point is equal to 0 and of calling upon firstly the lighting means (M3), then the masking means with low thermal incidence (M2) and finally the masking means with high thermal incidence (M1), if the position set point is equal to 1.

22. The installation as claimed in claim 16 or 17, comprising two processors (P1, P2), characterized in that themasking means with high thermal incidence (M1) is equipped with a position sensor delivering an analog value (M_ALPHA) of the degree of opening of this means, means being provided to calculate the analog value of the position set point (ALPHA) according to a law of automatic correction, and the processors being programmed in such a way that a position set point (ALPHA) greater than the measured analog value increased by a hysteresis value produces a control sequence (SCA(1)) intended to fully satisfy the set point, whereas a position set point less than the measured analog value decreased by a hysteresis value first of all brings about the complete opening of the masking means with low thermal incidence (M2) and control of the closing of the masking means with high thermal incidence (M1) is interrupted during this positioning, as soon as the request (DB) for less light disappears.

23. The installation as claimed in claim 16 or 17, comprising a single processor (P), characterized in that the masking means with high thermal incidence (M1) is equipped with a position sensor delivering an analog value (M_ALPHA) of the opening of this means, means being provided to calculate the analog value of the position set point (ALPHA) according to a law of automatic correction, and the processor being programmed in such a way that a position set point greater than the analog value, increased by a hysteresis value, produces a control sequence (SCA(1)) intended to satisfy it fully, whereas a position set point less than the measured value, decreased by a hysteresis value, first of all brings about the complete opening of the masking means with low thermal incidence (M2), then the order to close the masking means with high thermal incidence, which order as soon as a light level less than or equal to the light level set point (CNL) is detected.

24. The installation as claimed in claim 16 or 17, comprising two processors (P1, P2), characterized in that the masking means with high thermal incidence (M1) is equipped with a position sensor delivering an analog value (M_ALPHA) of the degree of opening of this means (M1), means being provided to calculate the analog value of the position set point (ALPHA) according to a law of automatic correction, and the processors being programmed in such a way that during automatic corrections of light level, a request to increase the light level has the effect of calling upon firstly the masking means with high thermal incidence (M1), then the masking means with low thermal incidence (M2) and finally the lighting means (M3) if the position set point is greater than the measured analog value (M_ALPHA) and of calling upon firstly the masking means with low thermal incidence (M2) then the means with high thermal incidence (M1) and finally the lighting means (M3), if the position set point is less than the measured analog value, and in that a request to decrease the light level has the effect of calling upon firstly the lighting means (M3), then the masking means with low thermal incidence (M2) and finally the masking means with high thermal incidence (M1) if the position set point is greater than the measured analog value, and of calling upon firstly the lighting means (M3), then the masking means with high thermal incidence (M1) and finally the masking means with low thermal incidence (M2), if the position set point is less than the measured analog value.

25. The installation as claimed in claim 16 or 17, comprising two processors (P1, P2), characterized in that the masking means with high thermal incidence (M1) is equipped with a position sensor delivering an analog value (M_ALPHA) of the degree of opening of this means, means being provided to calculate the analog value of the position set point (ALPHA) according to a law of automatic correction and the processors being programmed in such a way that the position set point is firstly satisfied and that, during automatic corrections of the light level, a request to increase the light level has the effect of calling upon firstly the masking means with low thermal incidence (M2) then the lighting means (M3) and finally the masking means with high thermal incidence (M1), if the position set point is less than the measured analog value (M_ALPHA), and of calling upon firstly the masking means with high thermal incidence (M1), then the means with low thermal incidence (M2) and finally the lighting means (M3), if the position set point is greater than the measured analog value, and in that a request to decrease the light level has the effect of calling upon firstly the masking means with high thermal incidence (M1), then the lighting means (M3) and finally the masking means with low thermal incidence (M2), if the position set point is less than the measured analog value and of calling upon firstly the lighting means (M3), then the masking means with low thermal incidence (M2) and finally the masking means with high thermal incidence (M1), if the position set point is less than the measured analog value, and of calling upon firstly the lighting means (M3), then the masking means with low thermal incidence (M2) and finally the masking means with high thermal incidence (M1), if the position set point is greater than the measured analog value.

26. The installation as claimed in one of claims 1 to 15, in which the masking means are internal masking means of the type with orientable blades (LO) of which one (LOA) of the faces is essentially absorbent and the other face (LOR) essentially reflective of light, characterized in that it comprises means of detecting and storing three position saturation states of the blades, namely a state of maximum opening (FCA(1)), a state of closure in which the absorbent face is turned outwards (FCB1(1)) and a state of closure in which the reflective face is on the outwards side (FCB0(1)), the logic processing unit being programmed in such a way that a movement control in a first direction (SCA(1)) makes it possible, from an initial state in which the reflective faces of the blades are turned outwards, to pass successively to the state of maximum opening, then to the state in which the absorbent faces are turned outwards, whereas a movement control in a second direction (SCB (1)) makes it possible, from an initial state in which the absorbent faces are turned outwards, to pass successively to the state of maximum opening, then to the state in which the reflective faces are turned outwards, means being provided to detect and record the passage of the blades either side of the position of maximum opening, the recorded value (M_ALPHA) being 1 or 0 according as the blade passes from one side or the other of the position of maximum opening, and
- either a two-position switch making it possible directly to assign a value 1 or 0 to a position set point (ALPHA) of the masking means corresponding respectively to the interval of positions in which the absorbent faces are turned outwards and to the interval with positions in which the reflective faces are turned outwards;
- or a temperature-measuring problem (CT) measuring the inside temperature (TINT), the logic processing unit being programmed in such a way that the inside temperature (TINT) is periodically compared with a threshold temperature (TTHRESH) in order to formulate a position set point (ALPHA) of the masking means such that the former takes the value 1 or 0 corresponding respectively to the position interval in which the absorbent faces are turned outwards and to the position interval in which the reflective faces are turned outwards, if the inside temperature is less than the threshold temperature, respectively greater than the threshold temperature and, to position, in one or other of the preceding cases, the blades in such a way that the detected value is equal to the position set point value, and to activate one or other of the outputs (SCA, SCB) during automatic or manual corrections of the lighting level, according as the position value (M_ALPHA) is 1 or 0.
